# EUROPÄISCHE PATENTANMELDUNG

(11) **EP 4 243 342 A1**
(43) Veröffentlichungstag der Anmeldung: **13.09.2023**
(21) Anmeldenummer: 22161405.0
(22) Anmeldetag: 10.03.2022
(51) Int. Cl.: H04L 9/40, H04L 51/52, H04L 67/12, H04W 4/21, H04W 12/02, H04L 65/1069

(54) **VERFAHREN, VORRICHTUNG UND COMPUTERPROGRAMMPRODUKT ZUR SICHEREN KOMMUNIKATION ÜBER DAS INTERNET**

(71) Anmelder: Trutt, Martin, 04177 Leipzig (DE); Rolf, Michael, 8853 Lachen (CH)
(72) Erfinder: TRUTT, Martin, 04177 Leipzig (DE)
(74) Vertreter: Hertin und Partner Rechts- und Patentanwälte PartG mbB

(57) **Zusammenfassung**

In einem Aspekt ist die Erfindung auf ein Verfahren zur zertifikatsgestützten, anonymen und abhörsicheren Kommunikation gerichtet.

Weiterhin betrifft die Erfindung ein computerimplementiertes Verfahren zur informationssicheren Kommunikation zwischen mindestens einem ersten Kommunikationspartner und einem zweiten Kommunikationspartner, wobei der erste Kommunikationspartner ein erstes Kommunikationsgerät und der zweite Kommunikationspartner ein zweites Kommunikationsgerät besitzt, umfassend folgende Schritte:
a) Installation eines Computerprogrammproduktes auf jeweils einer Recheneinheit des ersten Kommunikationsgerätes und des zweiten Kommunikationsgerätes, wobei das Computerprogrammprodukt,
b) Übermittlung einer Einladung ausgehend vom ersten Kommunikationsgerät an das zweite Kommunikationsgerät, wobei bei der Übermittlung der Einladung ein Sicherheitszertifikat an das zweite Kommunikationsgerät übermittelt wird,
c) Annahme der Einladung ausgehend vom zweiten Kommunikationsgerät sowie Überprüfung des Sicherheitszertifikates,
d) Rückmeldung an einen Vermittlungsserver bei bestandener Prüfung des Sicherheitszertifikates,
e) direkte Übermittlung von Kommunikationsdaten zwischen dem ersten Kommunikationsgerät und dem zweiten Kommunikationsgerät.

Zudem ist die Erfindung sowohl auf ein Kommunikationsgerätenetzwerk als auch auf ein Computerprogrammprodukt gerichtet.

## Beschreibung

In einem Aspekt ist die Erfindung auf ein Verfahren zur zertifikatsgestützten, anonymen und abhörsicheren Kommunikation gerichtet.

Weiterhin betrifft die Erfindung ein computerimplementiertes Verfahren zur informationssicheren Kommunikation zwischen mindestens einem ersten Kommunikationspartner und einem zweiten Kommunikationspartner, wobei der erste Kommunikationspartner ein erstes Kommunikationsgerät und der zweite Kommunikationspartner ein zweites Kommunikationsgerät besitzt, umfassend folgende Schritte:
a) Installation eines Computerprogrammproduktes auf jeweils einer Recheneinheit des ersten Kommunikationsgerätes und des zweiten Kommunikationsgerätes, wobei das Computerprogrammprodu kt,
b) Übermittlung einer Einladung ausgehend vom ersten Kommunikationsgerät an das zweite Kommunikationsgerät, wobei bei der Übermittlung der Einladung ein Sicherheitszertifikat an das zweite Kommunikationsgerät übermittelt wird,
c) Annahme der Einladung ausgehend vom zweiten Kommunikationsgerät sowie Überprüfung des Sicherheitszertifikates,
d) Rückmeldung an einen Vermittlungsserver bei bestandener Prüfung des Sicherheitszertifikates,
e) direkte Übermittlung von Kommunikationsdaten zwischen dem ersten Kommunikationsgerät und dem zweiten Kommunikationsgerät.

Zudem ist die Erfindung sowohl auf ein Kommunikationsgerätenetzwerk als auch auf ein Computerprogrammprodukt gerichtet.

### Hintergrund und Stand der Technik

Die heutige Kommunikation läuft überwiegend über das Internet. So nutzen schätzungsweise Milliarden von Menschen WhatsApp, um Nachrichten zu übermitteln. Aber auch andere Dienste, wie z. B. Socialmedia-Plattformen (bspw. Instagramm, Facebook, etc.), werden zur Kommunikation verwendet. Des Weiteren haben auch Plattformen an Bedeutung gewonnen, die Chats, Besprechungen, Notizen und Anhänge miteinander kombinieren, wie z. B. Microsoft Teams oder Zoom. Solche Dienste sind insbesondere im Zuge der Covid-19-Pandemie in den Fokus vieler Menschen gerückt, in der es zu Anfang nicht erwünscht und teilweise sogar nicht möglich war, dass Menschen untereinander viel und engen Kontakt haben. Mit der Zeit der Modernisierung und Globalisierung gewinnen Softwareplattformen für Kommunikation immer mehr an Relevanz.

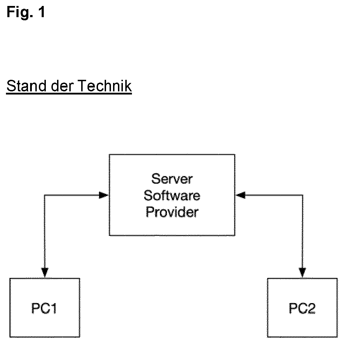

Die meisten Softwaresysteme, die derzeit genutzt werden, basieren auf sogenannten Client-Server-Lösungen, so dass der Betreiber der Software immer die Datenhoheit hat (siehe auch Fig. 1). Im Detail kann der Nutzer der Software nicht nachvollziehen, was der Hersteller mit den Daten macht, die über seinen Server verteilt werden. Diese Problematik liegt sowohl für Software für den E-Mail-Verkehr als auch für Chats, Socialmedia-Accounts und/oder Videokonferenzen vor.

Des Weiteren liegen Risiken hinsichtlich der Datensicherheit vor, wenn Nutzer die genannten auf Software basierten Kommunikationsmöglichkeiten nutzen. Die Funktionalitäten der jeweils genutzten Software bieten auch die Möglichkeit des Missbrauchs durch die Nutzer selbst an, da diese die Option besitzen, automatisiert Themen, Stellungnahmen und/oder Antworten zu generieren. Mithin zeigen die derzeitigen Systeme sicherheitsrelevante Schwächen auf, sowohl von Seiten der Softwareprovider (Hoster) als auch auf Seiten der Nutzer der einzelnen Softwarepakete. Diese Nachteile liegen neben den genannten Softwareplattformen auch bei Systemen wie Telegramm, iMessage und/oder andere vergleichbare Software vor.

Mit Einführung der DSGVO (Datenschutzgrundverordnung) wurden diverse Anstrengungen unternommen, die bei der Kommunikation über das Internet anfallenden Daten zu schützen. Konzerne, wie z. B. Facebook, sehen sich zwar immer größer werdenden Regularien ausgesetzt, eine wirkliche Kontrolle über die Datenströme bzw. die Art und Weise, wie damit umgegangen wird, kann jedoch nicht vorgenommen werden. Unter anderem liegt das daran, dass die anfallenden und gesammelten Daten über Ländergrenzen hinweg einfach verarbeitet und damit Landesgesetze oft nicht durchgesetzt werden können.

Auch können Chatnutzer, Nutzer von Konferenzsoftware und/oder Nutzer von Socialmedia-Software nicht erkennen, ob gesendete Nachrichten von Menschen, einer Software und/oder einem Roboter erstellt wurden. Mit den derzeitigen Mitteln des Standes der Technik gibt es für die Nutzer, die die Kommunikationsmöglichkeiten des modernen Internets nutzen, keine Möglichkeit zu erkennen, wer wirklich die Daten generiert hat. Ebenso ist es nicht ersichtlich, was mit den von Ihnen erzeugten/versendeten Daten gemacht wird.

Insbesondere ist es im heutigen Stand der Technik nicht möglich, einen Nutzer mit dem man über E-Mail oder Chat kommuniziert, eindeutig zu identifizieren. Jeder kann einen Nutzeraccount mit einer beliebigen Kennung erstellen und über diesen kommunizieren. Auch durch Identitätsdiebstahl kann eine fingierte Kommunikation aufgebaut werden. Bei heutigem Stand der Technik ist dies eine verbreitete Methode, um an Informationen oder Geld zu gelangen. Der heutige Stand der Technik ermöglicht es, mit falschen Identitäten zu kommunizieren oder Plattformen mit Nachrichten aus automatisierten Systemen zu überfluten, ohne dass Menschen erkennen können, dass Sie nicht mit Menschen, sondern mit Maschinen kommunizieren. Nach heutigem Stand der Technik ist es relativ einfach, Nachrichten nach dem Senden zu verändern, sodass der Empfänger eine Nachricht mit geändertem Inhalt erhält. Um Maßnahmen gegen diese Art von Angriff zu treffen müssen bei den heutigen Systemen zusätzliche Verschlüsselungssysteme installiert werden.

Mithin liegt ein Bedarf vor, die Kommunikationsmöglichkeiten unter Nutzung des Internets sicherer zu gestalten.

### Aufgabe der Erfindung

Aufgabe der vorliegenden Erfindung war es, die Nachteile des Standes der Technik zu beseitigen. Insbesondere war es eine Aufgabe der Erfindung, eine Kommunikationsmöglichkeit zu bieten, die eine verbesserte Datensicherheit sowie die Kommunikation als solche vor Angriffen zuverlässig schützt.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einem ersten Aspekt betrifft die Erfindung ein Verfahren für eine zertifikatsgestützte, anonyme und abhörsichere Kommunikation.

Zudem betrifft die Erfindung ein Verfahren für eine zertifikatsgestützte Verbindungssteuerung.

Des Weiteren ist die Erfindung auf ein Verfahren zur zertifikatsgestützten direkten Kommunikation zwischen PC's und clustergestützten Lastverteilung der einzelnen an der Kommunikation beteiligten PC's gerichtet.

Ebenfalls ist ein Aspekt der Erfindung ein Verfahren für Vermittlungsserver und Anwendungen zur Registrierung und zertifikatsgestützten Einladung weiterer anonymer Nutzer.

Die Erfindung betrifft auch ein Verfahren zur Lastverteilung bei direkter PC-gestützter Kommunikation.

Weiterhin ist die Erfindung auf ein Verfahren zur Lastverteilung bei direkter PC-gestützter Kommunikation mit integrierter rechtssicheren Kommunikationssicherung für Unternehmen gerichtet.

Zudem betrifft die Erfindung ein softwaregestütztes Verfahren zur Steuerung und die zertifikatsgestützte, anonyme, serverlose Kommunikation zwischen Clients.

Die Erfindung bezieht sich auch auf ein Verfahren für einen zertifikatsgestützten Kommunikationsserver zur Registrierung und anonymen Kontaktetablierung.

Weiterhin ist die Erfindung auf ein Verfahren für einen zertifikatsgestützten Kommunikationsserver zur Registrierung, eine Kontaktetablierung und eine rechtssichere Speicherung für Unternehmen gerichtet.

In einem weiteren Aspekt betrifft die Erfindung ein computerimplementiertes Verfahren zur informationssicheren Kommunikation zwischen mindestens einem ersten Kommunikationspartner und einem zweiten Kommunikationspartner, wobei der erste Kommunikationspartner ein erstes Kommunikationsgerät und der zweite Kommunikationspartner ein zweites Kommunikationsgerät besitzt, umfassend folgende Schritte:
a) Installation eines Computerprogrammproduktes auf jeweils einer Recheneinheit des ersten Kommunikationsgerätes und des zweiten Kommunikationsgerätes,
b) Übermittlung einer Einladung ausgehend vom ersten Kommunikationsgerät an das zweite Kommunikationsgerät, wobei bei der Übermittlung der Einladung ein Sicherheitszertifikat an das zweite Kommunikationsgerät übermittelt wird,
c) Annahme der Einladung ausgehend vom zweiten Kommunikationsgerät sowie Überprüfung des Sicherheitszertifikates,
d) Rückmeldung an einen Vermittlungsserver bei bestandener Prüfung des Sicherheitszertifikates,
e) direkte Übermittlung von Kommunikationsdaten zwischen dem ersten Kommunikationsgerät und dem zweiten Kommunikationsgerät.

Mithilfe des bevorzugten Verfahrens, insbesondere des Computerprogrammproduktes (im erfindungsgemäßen Kontext auch als Point One oder Point One App bezeichnet) werden vorteilhaft die im Stand der Technik vorhandenen Schwachstellen während der Kommunikation mithilfe des Internets beseitigt. Fingierte Identitäten, Identitätsdiebstahl, automatisierte Massennachrichten mit meinungsmachendem Inhalt oder Änderungen an versendeten Nachrichten sind vorteilhafterweise nicht mehr möglich.

Vorteilhaft erlaubt bevorzugt das Computerprogrammprodukt und/oder das bevorzugte Verfahren nur die Kommunikation zwischen Menschen, die sich eindeutig identifiziert haben. Automatisiert erstellte Massennachrichten sind nicht möglich, da das Computerprogrammprodukt (Point One) ein in sich geschlossenes System ist, das keine Möglichkeit unterstützt, fremde Software anzubinden.

Insbesondere die Funktion des Computerprogrammproduktes (Point One oder Point One App) beruht auf der Erstellung der Sicherheitszertifikate und der darin enthaltenen Verschlüsselungs- und Verbindungsdaten. Kommunizieren können nur Nutzer, die eindeutig identifiziert wurden. Mit der Registrierung als Nutzer (Synonym zum Kommunikationspartner) auf dem (Point One App -) Vermittlungsserver erhält dieser eine eindeutige Kennung und ein Zertifikat, mit dem die Software einmal installiert werden kann. Eine Verbindung kann bevorzugt der Nutzer nur zu anderen registrierten Nutzern der Point One App bzw. des Computerprogrammproduktes aufnehmen, wenn er von diesem eingeladen wurde oder wenn er den Nutzer zuvor eingeladen hat. Vorzugsweise tauschen die Computerprogrammprodukte nach einer angenommenen Einladung in regelmäßigen Abständen die Verbindungsdaten, wie z. B. die IP-Adressen, aus, um für den jeweils anderen erreichbar zu sein. Bevorzugt ist jede Form der Übertragung verschlüsselt und geht direkt von Kommunikationsgerät zu Kommunikationsgerät (z. B. ein PC). Vorzugsweise sind Server an der Kommunikation nicht beteiligt. Für die Verschlüsselung werden bevorzugt Sicherheitszertifikate genutzt, die zuvor bei der Einladung ausgetauscht und zugelassen wurden. Eventuellen Angreifern wird es dadurch unmöglich gemacht, die Kommunikation mitzuhören oder Einfluss auf die Kommunikation zu nehmen.

Im Folgenden sollen beispielhafte (jedoch nicht darauf beschränkte) Kommunikationsweisen bzw. verschiedene Arten des Austauschs von Kommunikationsdaten illustriert werden:
Beispiel Verbindungsaufbau Textnachricht:
   Ein Nutzer des Computerprogrammproduktes (Point One App) sendet eine Nachricht an einen anderen Nutzer des Computerprogrammproduktes. Der Port, auf dem die Nachricht eingeht, wird von dem Computerprogrammprodukt überwacht. Beim Eintreffen eines Datenpaketes auf dem überwachten Port wird überprüft, ob dies eine zugelassene Kennung und die dazu passende Verschlüsselung nutzt. Erst wenn dies gegeben ist, wird das Datenpaket von dem Computerprogrammprodukt verarbeitet. Datenpakete, welche nicht die Anforderungen an die Kennung oder Verschlüsselung erfüllen, werden geblockt. Datenpakete, die die Anforderungen des Computerprogrammproduktes erfüllen, werden verarbeitet.
Beispiel Verbindungsaufbau Videonachricht:
   Auch hier werden zuerst die eingehenden Datenpakete überprüft und nur zugelassene Datenpakete verarbeitet. Werden die Datenpakete akzeptiert, wird eine beidseitige Verbindung etabliert. Das erfolgt über die Verbindungsinformationen, die zwischen den Nutzern ausgetauscht wurden. Die Daten, die während der Verbindung übertragen werden, werden vordem Versenden verschlüsselt und können nur vom Empfänger entschlüsselt werden, da nur dieser über den entsprechenden Schlüssel verfügt.

Der eigentliche Vorgang der Bild- und/oder Tonaufnahme bzw. der Texterstellung erfolgt bevorzugt nach den gängigen Verfahren des Standes der Technik. Die Unterschiede gegenüber dem Stand der Technik liegen bevorzugt in den Tatsachen, dass die Kommunikation nur bei eindeutiger Kennung, nur mit dem erhaltenen Zertifikat, nur verschlüsselt und nur zwischen den beteiligten Kommunikationsgeräten stattfindet. Die Daten, die während der Kommunikation entstehen sind, nur auf den beteiligten Systemen entschlüsselt und gespeichert.

Die Kombination der vorgeschlagenen Verfahrensschritte führt zu einem überraschenden Synergieeffekt, der zu den vorteilhaften Eigenschaften und dem damit einhergehenden Gesamterfolg der Erfindung führt. Die einzelnen Merkmale und/oder Verfahrensschritte der Erfindung stehen hierbei in Wechselwirkung zueinander.

Ein besonders bedeutender Vorteil des bevorzugten Verfahrens ist, dass eine serverlose Übermittlung der Kommunikationsdaten ermöglicht wird. Hingegen würden nach dem heutigem Stand der Technik die Kommunikationsdaten über den Server des Softwareproviders geleitet. Im bevorzugten Verfahren ist vorteilhaft der Vermittlungsserver der Punkt, an dem die Informationen für den Verbindungsaufbau der Kommunikationsgeräte errichtet werden. Somit kann vorteilhaft verhindert werden, dass Daten, insbesondere Kommunikationsdaten, über einen Server des Serverproviders geliefert werden. Folglich wird vorteilhaft durch das bevorzugte Verfahren die Datensicherheit als solche für die Kommunikation erheblich erhöht. Damit ist auch die direkte Kommunikation, d. h. das Vermeiden eines "Umwegs" zu einem Server, zwischen Kommunikationsgerät zu Kommunikationsgerät, ebenfalls als Abkehr vom Stand anzusehen.

Vorteilhaft können durch den Einsatz des bevorzugten Verfahrens Kommunikationspartner abhörsicher und direkt miteinander kommunizieren. Nur durch eine Rückverfolgung der aufgerufenen IP-Adressen könnte festgestellt werden, dass Kommunikationsgeräte in einer Datenverbindung zueinander standen.

Die bevorzugten Schritte des bevorzugten Verfahrens sind insbesondere durch die Ausgestaltung des Computerprogrammproduktes ausführbar.

Vorzugsweise ist eine Kommunikation zwischen Kommunikationspartnern nur dann möglich, wenn alle Kommunikationspartner das Computerprogrammprodukt auf eine Recheneinheit des jeweiligen Kommunikationsgerätes installiert haben. Damit ist die Kommunikation auf den Kreis der Menschen, die das bevorzugte Computerprogrammprodukt installiert haben, eingeschränkt.

Vorteilhafterweise ist eine unerwünschte Kontaktaufnahme, beispielsweise im Gegensatz zu Telefonanrufen und/oder SMS-Nachrichten, nicht möglich über das bevorzugte Computerprogrammprodukt. Mithin werden vorteilhaft durch das bevorzugte Verfahren sicherheitsrelevante Aspekte für einen Datenaustausch zwischen Menschen erhöht.

Da Kommunikation, insbesondere Kommunikation über das Internet, unter Ausnutzung von Kommunikationsgeräten erfolgt, ist der technische Charakter des bevorzugten Verfahrens gegeben. So wird vorteilhaft vermieden, dass Fremde die Kommunikation stören, auf Kommunikationsdaten zugreifen und/oder diese verändern können.

Die bevorzugte Kommunikation zwischen einem ersten und einem zweiten Kommunikationspartner ist nicht auf lediglich zwei Kommunikationspartner beschränkt. So können auch 3, 4, 5, 6, 7, 8, 9, 10, 50, 100, 1 000 oder mehr Kommunikationspartner miteinander kommunizieren.

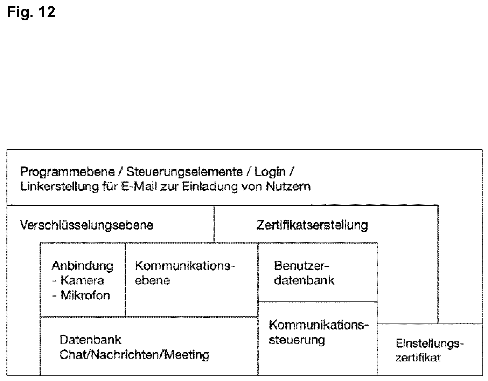

Insbesondere sind folgende Voraussetzungen notwendig, damit eine Kommunikation erfolgen kann:
1. Die Kommunikationsgeräte der Kommunikationsteilnehmer müssen jeweils das Computerprogrammprodukt zur Verfügung haben (siehe Fig. 12).
2. Ein Kommunikationsteilnehmer muss eine Einladung versenden, die wiederrum angenommen werden muss.
3. Eine Einladung kann nur ein Kommunikationsteilnehmer versenden, der ein Computerprogrammprodukt (die Point One App) besitzt, der diese Funktion aufweist. Ein Kommunikationsteilnehmer, der ein Computerprogrammprodukt besitzt, welches nur Einladungen annehmen kann (die Point Zero App), kann dementsprechend keine Einladungen aussenden. Ebenfalls kann ein solcher Kommunikationsteilnehmer keine Meetings planen, er kann lediglich adhoc Verbindungen zu Nutzern aufbauen, von denen er eingeladen wurde.

Vorzugsweise wird bei der Übermittlung einer Einladung ausgehend vom ersten Kommunikationsgerät an das zweite Kommunikationsgerät ebenfalls Sicherheitszertifikat an das zweite Kommunikationsgerät übermittelt wird.

Bevorzugt wird eine Benutzerkennung des ersten Kommunikationsgerätes mit dem Sicherheitszertifikat des zweiten Kommunikationsgerätes geprüft. Die Zertifikate von dem ersten Kommunikationsgerät (Einlader) und dem zweiten Kommunikationsgerät (Eingeladener) müssen jeweils die passende Benutzerkennung aufweisen, damit die Verbindungsinformationen ausgetauscht werden können. Ohne diesen erstmaligen Abgleich können die Kommunikationsgeräte und dementsprechend die Kommunikationsteilnehmer nicht miteinander kommunizieren.

Nach der Überprüfung der Zertifikate wird bevorzugt die Verbindung der Sicherheitszertifikate der jeweiligen Kommunikationsteilnehmer ermöglicht. Dazu wird der Teil des Sicherheitszertifikates, der die eingeladenen Kommunikationsteilnehmer verwaltet, genutzt und in der Zertifikatsverwaltung wird das Sicherheitszertifikat des Einladenden mit einem Zusatz versehen, wodurch die Annahme der Einladung bestätigt wird. Direkt im Anschluss wird dieses Sicherheitszertifikat an den Einladenden übermittelt. Wenn dieser nun dies auf seinem Kommunikationsgerät bestätigt, wird das Zertifikat innerhalb des Computerprogrammproduktes um die Informationen des Eingeladenen erweitert. Ab diesem Zeitpunkt können der erste Kommunikationspartner (Einlader) und der zweite Kommunikationspartner (Eingeladener) über das Computerprogrammprodukt miteinander kommunizieren.

Dabei erfolgt die Kommunikation direkt untereinander, d. h. ohne einen "Umweg", um auf den Server eines Softwareproviders zu gelangen. Im Sinne der Erfindung bezeichnet eine "direkte Kommunikation" damit insbesondere ein serverlose Übermittlung von Kommunikationsdaten. Insbesondere bedeutete eine direkte Kommunikation, dass es keinen Server gibt, der die Kommunikation aufbaut, die Kommunikationsdaten zwischenspeichert und/oder verteilt. Die Daten werden bevorzugt über das Internet direkt von einem Kommunikationsgerät zum anderen Kommunikationsgerät übertragen. Die Internetserver, welche bevorzugt die Daten übertragen, können nicht einsehen, was Sie übertragen, sie leiten die Datenpakete bevorzugt lediglich weiter.

Der Vermittlungsserver ist hierbei nicht mit einem üblichen Server eines im Stand der Technik üblichen Serverproviders für Kommunikationssoftware zu vergleichen. Vorzugsweise ist der Vermittlungsserver ein Vermittler, der außer dem Sicherheitszertifikat keine weitere Daten speichert. Nach dem heutigem Stand der Technik würde die Kommunikation über den Server des Softwareproviders geleitet. Erfindungsgemäß ist es jedoch vorgesehen, dass der Vermittlungsserver lediglich den Punkt darstellt, der die Informationen für den Verbindungsaufbau den zugelassenen Nutzern zur Verfügung stellt.

Im Sinne der Erfindung bezeichnet eine informationssichere Kommunikation eine derartige Kommunikation, dass keine Informationen verarbeitet, gespeichert und/oder gelagert werden, sodass Schutzziele wie Vertraulichkeit, Verfügbarkeit und/oder Integrität realisiert werden. Insbesondere dient die informationssichere Kommunikation dem Schutz vor Gefahren, Bedrohungen sowie der Minimierung von Risiken hinsichtlich der Hoheit von Informationen, die während einer Kommunikation über das Internet zur Verfügung gestellt werden.

Ein Kommunikationsgerät bezeichnet bevorzugt eine Vorrichtung, mit der eine Kommunikation ausübbar ist, insbesondere unter Nutzung des Internets. So kann im erfindungsgemäßen Kontext ein Kommunikationsgerät ein Computer, ein Tablet, ein IPad, ein Smartphone und/oder eine ähnliche Vorrichtung sein.

Vorzugsweise weist ein Kommunikationsgerät eine Kommunikationseinheit auf, um die Kommunikation als solche ausüben zu können. Die Kommunikationseinheit bezeichnet eine Sende- und/oder Empfangseinheit, die dazu eingerichtet ist, Daten zu versenden und/oder zu empfangen.

Die Recheneinheit bezieht sich vorzugsweise auf eine beliebige Vorrichtung, die dazu konfiguriertet werden kann, Rechenoperationen durchzuführen. Bevorzugt ist die Recheneinheit ein Prozessor, ein Prozessorchip, ein Mikroprozessor und/oder ein Mikrocontroller. Die Recheneinheit kann auch bevorzugt eine programmierbare Leiterplatte sein. Die Recheneinheit kann auch vorzugsweise ein computerverwendbares oder computerlesbares Medium, wie eine Festplatte, einen Direktzugriffsspeicher (RAM), einen Festwertspeicher (ROM), einen Flash-Speicher usw. umfassen.

In einer weiteren bevorzugten Ausführungsform ist das computerimplementierte Verfahren dadurch gekennzeichnet, dass das Sicherheitszertifikat durch die Installation des Computerprogrammproduktes bereitgestellt wird.

Vorzugsweise wird vor der Installation des Computerprogrammproduktes auf ein Kommunikationsgerät der Anwender des Computerprogrammproduktes als ein potentieller Kommunikationsteilnehmer registriert. Die Registrierung erfolgt beim Hersteller des Computerprogrammproduktes. Jeder Nutzer des Computerprogrammproduktes wird registriert und erhält einen ausschließlich für Ihn passenden Registrierungsschlüssel, der nur von diesem Nutzer benutzt werden kann. Vorzugsweise ist das Computerprogrammprodukt auf maximal 3 Kommunikationsgeräten installierbar. Für jede weitere Installation werden bevorzugt zusätzliche Registrierungsschlüssel benötigt.

Der Registrierungsschlüssel ermöglicht zum einen die Installation des Computerprogrammproduktes und zum anderen sorgt er für die Synchronisation der jeweils installierten Computerprogrammprodukte, die mit dem identischen Registrierungsschlüssel benutzt werden und/oder deren Registrierungsschlüssel zu einer Gruppe gehören, welche dem gleichen Nutzer zugeordnet werden kann. Die Synchronisation der einzelnen Computerprogrammprodukte sorgt dafür, dass eine interne Datenbank des Computerprogrammproduktes auf allen Kommunikationsgeräten eines Nutzers immer den gleichen Informationsstand hat. Die Anmeldung zum Erhalt des Registrierungsschlüssels ist bevorzugt der einzige Moment, in dem Nutzerdaten gespeichert werden.

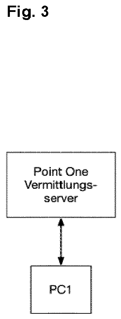

Bei der Installation des Computerprogrammproduktes ist es bevorzugt, dass der Nutzer sich beim Hersteller zur Prüfung des Registrierungsschlüssel meldet, wobei hierzu bevorzugt eine Internetverbindung erforderlich ist. Zudem erfolgt bevorzugt eine Verifizierung der Anzahl der bereits durchgeführten Installationen. Die Installation wird bevorzugt nur dann fortgesetzt, wenn die Prüfung des Registrierungsschlüssels erfolgreich war und die maximale Anzahl an Installationen noch nicht erreicht wurde (siehe Fig. 3).

Bei der Installation des Computerprogrammproduktes werden verschiedene Informationen des Kommunikationsgerätes und/oder der Recheneinheit abgefragt, auf dem die Software installiert wird. Diese Informationen werden genutzt, um zum einen ein Sicherheitszertifikat zu erstellen, das zur späteren Verschlüsselung der Kommunikationsdaten genutzt wird und um zum anderen zu gewährleisten, dass das Computerprogrammprodukt nur auf der maximalen Anzahl von Geräten installiert werden kann. Jede Installation mit dem eindeutigen Registrierungsschlüssel oder einem der zugehörenden erweiterten Registrierungsschlüssel der Gruppe ermöglicht es, eindeutig zu erkennen, auf wie vielen Kommunikationsgeräten der Registrierungsschlüssel bereits eingesetzt wurde. Das so erstellte jeweilige Sicherheitszertifikat umfasst mehrere Teile. Ein Teil wird bevorzugt als öffentlicher Schlüssel (englisch: public key) auf dem Server des Herstellers veröffentlicht.

Der öffentliche Schlüssel lässt vorteilhaft keinen Rückschluss darauf zu, wer diesen Schlüssel generiert hat. Der öffentliche Schlüssel wird bevorzugt von dem Computerprogrammprodukt dazu genutzt, die für den Verbindungsaufbau notwendigen Informationen mit den eingeladenen Nutzern, die eine Freigabe für einen Account haben, zur Verfügung zu stellen. Dadurch sind vorteilhaft Computerprogrammprodukte, sobald diese online sind, für die zugelassenen Nutzer erreichbar, d. h. insbesondere, wenn die Kommunikationsgeräte mit dem Internet verbunden sind.

Für diesen Zweck wird bevorzugt der Vermittlungsserver bereitgestellt. Bei einer Kommunikation zwischen mehreren Kommunikationsteilnehmern mit jeweiligen Kommunikationsgeräten, insbesondere im Rahmen einer privaten Kommunikation, ermöglicht es der Vermittlungsserver, den Kontakt unter den Kommunikationsteilnehmern aufzubauen. Dabei wirkt der Vermittlungsserver als Vermittler und speichert außer dem Sicherheitszertifikat keine weiteren Daten, insbesondere keine Kommunikationsdaten.

Vorzugsweise ist das bei der ersten Installation erstellte Zertifikat auch notwendig, um das Computerprogramprodukt ein zweites Mal auf dem gleichen Kommunikationsgerät zu installieren. Dies kann vorteilhaft dann notwendig werden, wenn das Kommunikationsgerät nach einem Problem neu aufgesetzt werden muss. Das Sicherheitszertifikat wird bevorzugt auch benötigt, um die Daten anderer Installationen nach der erneuten Installation wieder synchronisieren zu können.

Vorteilhafterweise kann das Sicherheitszertifikat nicht erneuert werden, was ebenfalls die Sicherheit der Kommunikation erhöht. Nach einer einmaligen Erstellung (je Kommunikationsgerät) kann das Computerprogrammprodukt bevorzugt nur noch mit dem dazu gehörenden Sicherheitszertifikat auf dem jeweiligen Kommunikationsgerät installiert werden. Wird vorzugsweise das Sicherheitszertifikat beschädigt oder wenn es verloren geht, muss ein neuer Registrierungsschlüssel erstellt werden.

Nur wenn bevorzugt der neue Registrierungsschlüssel der gleichen Gruppe zugeordnet werden kann, können die bereits vorhandenen Installationen mit der neu installierten Version kommunizieren und sich synchronisieren. Wird insbesondere ein neues Kommunikationsgerät angeschafft und ein altes mit dem Computerprogrammprodukt ausgestattetes Kommunikationsgerät ausgemustert, wird eine neue Registrierung erforderlich, wenn es bereits auf der maximalen Anzahl von Kommunikationsgeräten installiert war.

Vorzugsweise wird bei der Installation des Kommunikationsgerätes ein Ordner angelegt, auf den das Computerprogrammprodukt zugreifen kann. Das Computerprogrammprodukt wird vorzugswiese weitgehend vom Betriebssystem abgeschirmt. Dadurch kann bevorzugt die Übertragung von Daten aus dem Computerprogrammprodukt auf das Kommunikationsgerät lediglich über den von dem Computerprogrammprodukt angelegten Ordner erfolgen. Der Zugriff über die Zwischenablage oder auf ein anderes Verzeichnis ist dabei nicht möglich. Vorzugsweise wird dieser Ordner jedoch nicht synchronisiert.

Das Computerprogrammprodukt weist bevorzugt eine Datenbank auf, in der die Kommunikationsverläufe, die für die Kommunikation freigegebenen Kontakte sowie die dabei anfallenden Daten, gespeichert werden. Bevorzugt wird ausschließlich diese Datenbank synchronisiert. Die Datenbank ist vorzugsweise genauso wie das übrige Computerprogrammprodukt verschlüsselt und kann nur mit dem dazugehörenden Zertifikat entschlüsselt und gelesen werden.

Nach dem bevorzugten Abschluss der Installation und Eingabe eines Benutzernamens und des geforderten Passwortes wird in dem angelegten Ordner das Zertifikat für die neue bzw. die zusätzliche Installation abgelegt. Der Registrierungsschlüssel kann nur für die maximale Zahl an Installationen verwendet werden. Für die zusätzliche Installation muss jeweils der Registrierungsschlüssel sowie das Zertifikat der bereits installierten Computerprogrammprodukte benutzt werden. Jede neue Installation erzeugt ein neues geräteabhängiges Sicherheitszertifikat.

In einer weiteren bevorzugten Ausführungsform ist das computerimplementierte Verfahren dadurch gekennzeichnet, dass die Kommunikationsdaten für die Übermittlung verschlüsselt werden, bevorzugt durch ein asymmetrisches Verschlüsselungsverfahren.

Bevorzugt sind das PKI-Verfahren (PKI steht für den englischen Ausdruck public key infrastructure, d. h. eine Public-Key-Infrastruktur und somit bevorzugt ein System, welches digitale Zertifikate ausstellen, verteilen und/oder prüfen kann) und eine symmetrische Verschlüsselung in dem Computerprogrammprodukt (Point One) zusätzlich implementiert. Zusätzlich wird bevorzugt für zu übertragende Daten, insbesondere Kommunikationsdaten, ein eindeutiger Hash erstellt, der mit übertragen wird und anhand dessen die empfangenen Daten überprüft werden können.

Vorteilhafterweise kann hierdurch eine besonders hohe Sicherheit der Kommunikationsdaten, die zwischen den Kommunikationspartnern übermittelt werden, erlangt werden.

Das Computerprogrammprodukt verschlüsselt vorzugsweise die Kommunikationsdaten vor dem Versenden.

In einer weiteren bevorzugten Ausführungsform ist das computerimplementierte Verfahren dadurch gekennzeichnet, dass eine Datenübertragungsrate und/oder eine Datenkapazität von Kommunikationsgeräten von Kommunikationspartnern bestimmt wird.

Vorteilhafterweise kann durch eine Bestimmung der Datenübertragungsrate und/oder der Datenkapazität das Computerprogrammprodukt Kapazitäten der beteiligten Kommunikationsgeräte nutzen. Insbesondere können die Kommunikationsgeräte vorteilhafterweise zu einem Cluster erstellt werden, sodass vorteilhaft die Ressourcen nach Bedarf verteilt und ausbalanciert werden. Damit hängt beispielsweise die Qualität im Rahmen einer Videokommunikation von dem Kommunikationsgerät mit den geringsten Ressourcen ab. Da dieser Cluster in sich geschlossen und verschlüsselt ist, können vorteilhafterweise Dritte nicht darauf zugreifen.

Das Computerprogrammprodukt ermittelt bevorzugt während der Installation die Geschwindigkeit mit der Kommunikationsdaten, wie z. B. Videodaten, entschlüsselt und verarbeitet werden. Diese Informationen werden bevorzugt gespeichert und dienen bevorzugt der Aushandlung der zu empfangenden und zu verarbeitenden Videoqualität. Dieser Test kann insbesondere vom Nutzer bei Bedarf wiederholt und die Werte neu gespeichert werden. Damit die Ermittlung dieser Werte zu einem vom Nutzer akzeptierten Ergebnis führt, kann bevorzugt der Nutzer in die vorzunehmenden Einstellungen eingreifen und so, ein der Leistung entsprechendes optimales Ergebnis erzielen. Zur Ermittlung der vorhandenen Übertragungsraten werden bevorzugt generierte Testdaten versendet, die in Ihrer Art den Kommunikationsdaten, z. B. den Videodaten gleichen. Zusätzlich enthalten bevorzugt diese Pakete ein Anforderungsprofil für die optimalen Videodaten des Senders. Über die in den Testfiles enthaltenen Daten kann bevorzugt das Computerprogrammprodukt nun ermitteln, wie lange das Datenpaket für den Versand benötigt hat und in welcher Form die Videodaten für den Empfänger aufbereitet werden müssen. Dieser Austausch findet bevorzugt bei allen Teilnehmern einer Videokommunikation statt. Auf Basis der ermittelten Leistungsdaten werden bevorzugt den einzelnen Datenpakete eine erwartete Übertragungsdauer zugeordnet. Benötigen nun Pakete einzelner Nutzer unerwartet viel Zeit zur Übertragung, wird insbesondere mithilfe des bevorzugten Computerprogrammproduktes (bzw. des computerimplementierten Verfahrens) die Übertragungsqualität für den betroffenen Nutzer so angepasst, dass eine optimierte Übertragung und eine einfachere Bearbeitung ermöglicht wird. Auf diese Weise werden vorteilhafterweise die zu übertragenden Daten, insbesondere die Kommunikationsdaten, für die Empfänger angepasst.

Beim Stand der Technik kommt es aktuell immer mal wieder zu Überlastungen auf den Servern der Dienstleister, da die gesamte Kommunikation über deren Server läuft. Beim Einsatz des bevorzugten computerimplementierten Verfahrens und/oder des bevorzugten Computerprogrammproduktes ist die Leistung der einzelnen teilnehmenden Rechner bevorzugt entscheidend, da es vorzugsweise keinen Server gibt, der Daten verarbeiten muss. Nach heutigem Stand der Technik benötigen die servergestützten Lösungen neben der großen Rechnerleistung eine größtmögliche Internetanbindung, da viele unterschiedliche Nutzer z. B. gleichzeitig unabhängige Videokonferenzen abhalten können.

Um Beeinträchtigungen durch Kommunikationsgeräte mit zu geringer Leistungsfähigkeit zu verhindern, kann das Computerprogrammprodukt und/oder das auf dem entsprechenden Kommunikationsgerät, auf dem das Computerprogrammprodukt installiert ist, vorteilhafterweise als Relais benutzt werden. Das heißt insbesondere, dass das Computerprogrammprodukt als Kommunikationsserverserver für einzelne Teilnehmer mit zu schwacher Leistung und/oder zu geringer Internetanbindung fungiert. Damit das bevorzugte Computerprogrammprodukt in dieser Weise funktionieren kann, muss bevorzugt der jeweilige Kommunikationspartner die entsprechende Funktion aktivieren, um so eine Balance zwischen Ressourcen der einzelnen Kommunikationsteilnehmern zu ermöglichen. Auch hierbei ist das bevorzugte computerimplementierte Verfahren und damit auch das bevorzugte Computerprogrammprodukt dem heutigen Stand überlegen, da auch bei diesem Modus die Datensicherheit und Datenhoheit gewährleistet ist, da bevorzugt das Computerprogrammprodukt und/oder das Kommunikationsgerät, das als Relais fungiert, als direkter Teilnehmer der Kommunikation eingebunden ist und somit teilweise eigene Daten zur Kommunikation beisteuert. Aber auch diese Daten werden bevorzugt nicht automatisch gespeichert, sondern bevorzugt nach der Nutzung wieder gelöscht. Nur bei bevorzugt erfolgter Einwilligung aller Teilnehmer kann ein Teilnehmer die stattfindende Kommunikation speichern.

In einer weiteren bevorzugten Ausführungsform ist das computerimplementierte Verfahren dadurch gekennzeichnet, dass die Kommunikation zwischen mehreren Kommunikationspartnern erfolgt, die jeweils ein Kommunikationsgerät aufweisen und/oder die Kommunikation innerhalb eines Kommunikationsverbundes erfolgt.

Vorteilhafterweise eignet sich das computerimplementierte Verfahren damit sowohl für den privaten Gebrauch als auch für den Gebrauch innerhalb eines Kommunikationsverbundes. Vorteilhaft wird in beiden Anwendungsfällen eine informationssichere, insbesondere abhörsichere Kommunikation ermöglicht.

In einer weiteren bevorzugten Ausführungsform ist das computerimplementierte Verfahren dadurch gekennzeichnet, dass die Kommunikation zwischen Kommunikationspartnern erfolgt, wobei das erste Kommunikationsgerät und/oder das auf der Recheneinheit des ersten Kommunikationsgerätes installierte Computerprogrammprodukt den Vermittlungsserver bereitstellt.

Vorzugsweise dient der erste Kommunikationspartner mit seinem ersten Kommunikationsgerät als Einlader, während der zweite Kommunikationspartner mit seinem zweiten Kommunikationspartner als Eingeladener fungiert.

Vorzugsweise muss der Einlader über eine feste IP-Adresse erreichbar sein. Weiterhin ist es bevorzugt, dass die Sicherheitszertifikate zuvor ausgetauscht worden sind, damit sich der Eingeladene für eine Kommunikation, z. B. während eines Meetings, einloggen kann. Vorteilhafterweise werden immer dann, wenn ein zugelassener Nutzer mit seinem Kommunikationsgerät eine Internetverbindung verfügt und online geht, Kontaktinformationen ausgetauscht mit dem Computerprogrammprodukt eines Einladers.

Bevorzugt liegen die Benutzerdaten der zugelassenen Kommunikationspartner jeweils auf allen zugelassenen Geräten vor. Jedes Computerprogrammprodukt (Point One App) kann bevorzugt damit vorteilhafterweise als Vermittlungsserver genutzt werden.

Das weiter oben bereits beschriebene Sicherheitszertifikat umfasst mehrere Teile, unter anderem auch einen öffentlichen Schlüssel, wobei bevorzugt der öffentliche Schlüssel auf dem Server des Herstellers des Computerprogrammproduktes veröffentlicht (beglaubigt) wird.

Der öffentliche Schlüssel lässt vorteilhafterweise keinen Rückschluss darauf zu, wer diesen Schlüssel generiert hat. Der öffentliche Schlüssel wird allerdings bevorzugt dazu genutzt, die für den Verbindungsaufbau notwendigen Informationen mit den eingeladenen Nutzern, die eine Freigabe für einen Account haben, für den Verbindungsaufbau zu nutzen. Insbesondere sollen die für den Verbindungsaufbau benötigten Informationen zur Verfügung gestellt werden. Letztere Funktionsfähigkeit stellt vorteilhafterweise sicher, dass die Computerprogrammprodukte untereinander erreichbar sind, sobald ein Kommunikationspartner damit online ist, auch wenn beispielsweise einzelne Geräte öfters den Standort wechseln und/oder länger nicht erreichbar waren.

Für diesen Zweck gibt es den Vermittlungsserver, der insbesondere bei der privaten Nutzung ermöglicht, den Kontakt zwischen Kommunikationspartnern aufzubauen. Der Vermittlungsserver ist lediglich Vermittler, außer dem Sicherheitszertifikat speichert er keine Daten. Nach dem heutigen Stand der Technik würde die Kommunikation über den Server des Softwareproviders geleitet werden. Hingegen ist es im erfindungsgemäßen Kontext vorgesehen, dass der Vermittlungsserver lediglich den Punkt darstellt, der die Informationen für den Verbindungsaufbau den zugelassenen Nutzern zur Verfügung stellt.

Bei einem Kommunikationsverbund kann der Vermittlungsserver auf einem eigenen Server installiert werden. Die Kommunikation kann so innerhalb des Kommunikationsverbundes erfolgen und auch mit externen Kommunikationspartnern ermöglicht werden. Hierbei meinen externe Kommunikationspartner bevorzugt Kommunikationspartner, die nicht einen Teil des Kommunikationsverbundes darstellen.

In einer weiteren bevorzugten Ausführungsform ist das computerimplementierte Verfahren dadurch gekennzeichnet, dass die Kommunikation zwischen Kommunikationspartnern innerhalb eines Kommunikationsverbundes erfolgt, wobei bevorzugt der Vermittlungsserver auf einem Webserver installiert ist und als Vermittlungsstelle fungiert.

Die Kommunikation mit einem Kommunikationspartner innerhalb eines

Kommunikationsverbundes wird, insbesondere anders als beim privaten Einsatz, bevorzugt über die Vermittlungsstelle aufgebaut. Die eigentliche Kommunikation läuft weiterhin von Kommunikationsgerät zu Kommunikationsgerät, aber die Vermittlungsstelle kann unter dem Vorbehalt der Erlaubnis Kommunikationen aufzeichnen und/oder speichern. Die Vermittlungsstelle wird bevorzugt vom jeweiligen Kommunikationsverbund selbst gehostet. Vorteilhafterweise hat kein Dritter Zugriff auf die Vermittlungsstelle, sodass eine besonders sichere Kommunikation auch bei einem Kommunikationsverbund ermöglicht wird.

Vorteilhafterweise wird der Funktionsumfang des Computerprogrammproduktes durch die bevorzugte Vermittlungsstelle um Funktionen zur rechtssicheren Speicherung gesetzlich relevanter (z. B. unternehmenswichtiger) Kommunikation erweitert.

Wird bevorzugt das Computerprogrammprodukt mit einem Registrierungsschlüssel eines Kommunikationsverbundes installiert, den die Vermittlungsstelle einsetzt, kann das Computerprogrammprodukt nur über die passende Vermittlungsstelle Kontakte zulassen. Eine bevorzugt direkte Einladung, wie sie ohne Vermittlungsstelle durchgeführt werden kann, ist daraufhin nicht mehr möglich.

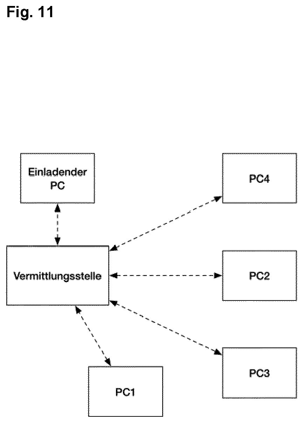

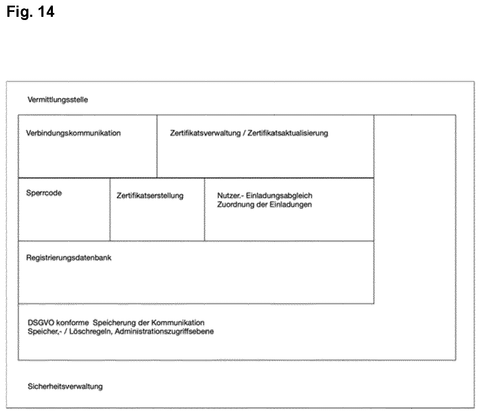

In bevorzugten Ausführungsformen erfüllt die Vermittlungsstelle die folgenden Aufgaben:
1. Die Vermittlungsstelle (siehe Fig.11, 14) kann nur einmal installiert werden. Auch hierfür ist ein Registrierungsschlüssel erforderlich. Dieser muss vor der Installation beantragt werden. Während der Installation erhält der Administrator ein Administrationszertifikat, das es dem Administrator ermöglicht, Zugriff auf die Vermittlungsstelle zu erhalten und diese zu administrieren. Werden von Benutzern Daten zur Archivierung und Einsichtnahme freigegeben, erhält der Administrator Lese- und/oder Kopierrechte auf diese Daten. Die gesicherten Daten können jedoch nur gelesen und nicht verändert werden.
2. Damit die Daten DSGVO (Datenschutzgrundverordnung) konform bleiben, können festgelegte Lösch- und/oder Speicherregeln für die Daten innerhalb der Vermittlungsstelle erstellt werden. Damit diese Regeln greifen, müssen die geplanten und/oder stattgefunden Kommunikationen vom Nutzer entsprechend gekennzeichnet werden. Einige grundlegenden Regelungen der DSGVO sind fest in der Vermittlungsstelle eingerichtet und werden automatisiert durchgeführt.
   2.1. Kontakte, mit denen innerhalb der letzten 24 Monate kein Kontakt aufgenommen wurde, werden eigenständig gelöscht. Vor der Löschung erhält der Nutzer, dem der jeweilige Kontakt zugeordnet wurde, eine Information, die es ihm ermöglicht, mit dem Nutzer Kontakt aufzunehmen, sodass der Automatismus wieder bei null (Monaten seit der letzten Kontaktaufnahme) beginnt.
   2.2. Daten werden vollautomatisiert gesichert. Der Sicherungszyklus und die Art der Sicherung werden durch den Administrator voreingestellt.
   2.3. Alle gesicherten Datensätze sind von der Vermittlungsstelle so gekennzeichnet, dass der Administrator Datensätze auch innerhalb der Backups löschen kann. Das gilt nicht für Daten die als rechtlich relevant gekennzeichnet wurden. Diese Daten können erst gelöscht werden, wenn die vorgegebene Bindungsfrist (in Jahren) abgelaufen ist.
3. Entgegennahme und Zwischenspeicherung von Nachrichten, auch wenn der Empfänger gerade offline (nicht erreichbar) ist. Das bedeutet, dass eingehende Nachrichten so lange gespeichert werden, bis diese an den Empfänger übertragen werden können. Sollen die Daten aus rechtlichen Gründen und/oder basierend auf internen Bedürfnissen gespeichert bleiben, so kann man die Vermittlungsstelle so konfigurieren, dass der Speicher erhalten bleibt und der Administrator diese im Bedarfsfall auslesen kann. Damit dies möglich wird, muss jeder betroffene Mitarbeiter zustimmen, indem er diese Speicherfunktion über das Computerprogrammprodukt einschaltet.
4. Verwaltung der Sicherheitszertifikate, sodass Nachrichten nach Ausscheiden eines Mitarbeiters noch lesbar sind. Dies erfordert jedoch die Genehmigung des jeweiligen Mitarbeiters. Die Genehmigung erfolgt über eine Einstellung innerhalb des Computerprogrammproduktes. Die Freigabe kann nur für zukünftige Daten zurückgenommen werden. Daten, die entstanden sind, während die Freigabe erteilt war, können vom Nutzer nicht mehr entsprechend geschützt werden.
5. Speicherung der Kommunikationskontakte aller externen und internen Nutzer des Computerprogrammproduktes. Anders als beim Privatnutzer erfolgt der Kommunikationsaufbau beim Einsatz der Vermittlungsstelle nicht über das Computerprogrammprodukt, sondern über die Vermittlungsstelle. Da die Kommunikation über die Vermittlungsstelle gespeichert werden kann, entstehen hier Daten, die nach der Freigabe durch den Nutzer von Dritten einsehbar sind.
6. Weiterleitung von Kommunikationsanfragen an externe und interne Nutzer. Alle in dem Computerprogrammprodukt gespeicherten Kontakte werden in der Vermittlungsstelle verwaltet. Einzelne Kommunikationspartner oder Gruppen können durch den Administrator über die Vermittlungsstelle blockiert und/oder (wieder) freigegeben werden. Ein blockierter Nutzer kann über das Computerprogrammprodukt nicht mehr angesprochen werden. Anders als im privaten Einsatz kann der Nutzer ohne die Freigabe über die Vermittlungsstelle keinen Kontakt zu anderen Nutzern aufnehmen. Das gilt sowohl für ein interne als auch für externe Kommunikation (bezogen auf den Kommunikationsverbund).
7. Die Adressbücher der zugelassenen Nutzer für sowohl interne als auch für externe Kontakte werden von der Vermittlungsstelle verwaltet und können innerhalb des Kommunikationsverbundes geteilt werden. Ausschließlich über die Vermittlungsstelle können Kontakte geteilt und für Andere mit deren Computerprogrammprodukt freigegeben werden. Sollen externe Nutzerkontakte über die Vermittlungsstelle für andere interne Nutzer freigegeben werden, so muss der externe Nutzer die Freigabeanforderung bestätigen, bevor die Freigabe erfolgen kann.
8. Die Vermittlungsstelle speichert alle Daten verschlüsselt, so dass die Daten gegen unbefugte Zugriffe geschützt sind. Damit die von einzelnen Nutzern freigegebenen Daten nutzbar bleiben, kann der Administrator über die Vermittlungsstelle ein Administrationszertifikat erhalten.
9. Anders als bei typischen Mail-Postfächern werden die Kommunikationsdaten zwar auf dem Server gespeichert, bleiben jedoch nicht in einem aktiven Speicher. Vielmehr werden Sie direkt archiviert. Die Daten sind nur innerhalb des Computerprogrammproduktes direkt im Zugriff, um damit zu arbeiten. Werden die Daten auf dem Rechner beschädigt oder erhält der Nutzer einen anderen Firmenrechner, können die Daten aus den gesicherten Serverdaten wiederhergestellt werden. Wurden die Daten durch eine Regel oder einen voreingestellten Automatismus gelöscht, sind diese nicht wieder herzustellen.
10. Je nach Art des Einsatzes und der Menge der zu speichernden Daten muss die Vermittlungsstelle über genügend Ressourcen verfügen. Dies betrifft sowohl den Speicherplatz als auch die Leistungsfähigkeit des eingesetzten Servers.

Beim aktuellen Stand der Technik geht die gesamte Kommunikation über externe Dienstleister bzw. Softwareprovider, welche die letztendliche Kontrolle über die Software und die Daten haben. Erfindungsgemäß wird dies insbesondere durch das Computerprogrammprodukt verhindert, indem eine direkte Kommunikation von Kommunikationsgerät zu Kommunikationsgerät ermöglicht wird.

Beim bevorzugten Einsatz Vermittlungsstelle baut diese einen Cluster umfassend eine Verbindung mehrerer Kommunikationsgeräte auf und steuert die Lastverteilung, so dass es auf dem Server selbst zu keiner Spitze kommen kann. Nach heutigem Stand der Technik ist es immer problematisch, wenn unerwartet viele Nutzer gleichzeitig auf den Server bzw. den Servercluster zugreifen, sodass oft Störungen oder Kommunikationsabbrüche resultieren. Vorteilhafterweise kann dies durch den Einsatz des bevorzugten Computerprogrammproduktes bzw. des computerimplementierten Verfahrens nicht geschehen, da die Last von den Kommunikationspartnern, die an der Kommunikation beteiligt sind, getragen wird.

Das Verfahren der Lastverteilung erfolgt bevorzugt nach dem identischen Verfahren, wie es bei dem bevorzugten Verfahren der Lastverteilung durch das Computerprogrammprodukt bereits beschrieben wurde. Der Unterschied liegt lediglich darin, dass die Vermittlungsstelle als Relais dient und nicht das Computerprogrammprodukt bzw. das entsprechende Kommunikationsgerät, auf dem das Computerprogrammprodukt (Point One) installiert ist. Im Umfeld eines Kommunikationsverbundes (z.B. Unternehmen, Schulen) können so gleichzeitig vorteilhafter verschiedene Konferenzen mit stabilen Verbindungen mit sehr vielen Nutzern gleichzeitig aufgebaut werden.

Vorteilhafterweise werden beispielsweise Aufzeichnungen von Videokonferenzen nicht über die Vermittlungsstelle gespeichert. Stattdessen werden bevorzugt alle Aufnahmen, wie z. B. Ton- und/oder Bildaufnahmen, immer innerhalb des gesicherten Computerprogrammproduktes gespeichert und können erst durch Freigabe der Kommunikationsteilnehmer exportiert werden.

Im Sinne der Erfindung bezeichnet ein Kommunikationsverbund eine Organisation, die bestrebt ist, eine internetgestützte Kommunikation ausführen zu können. Die Kommunikation kann sowohl innerhalb (intern) als auch mit Kommunikationspartnern außerhalb (extern) des Kommunikationsverbundes erfolgen. So kann ein Kommunikationsverbund ausgewählt sein aus einer Gruppe umfassend eine öffentliche Einrichtung, eine Bildungseinrichtung, eine Behandlungseinrichtung und/oder ein Unternehmen. Bevorzugt stellt der Kommunikationsverbund ein Unternehmen dar.

In einer weiteren bevorzugten Ausführungsform ist das computerimplementierte Verfahren dadurch gekennzeichnet, dass die Kommunikationsdaten ausgewählt sind aus einer Gruppe umfassend Textnachrichten, Fotos, Videos, Audionachrichten und/oder Anhänge.

Vorteilhafterweise können somit verschiedene Arten von Kommunikationsdaten übermittelt werden. Eine Einschränkung auf eine bestimmte Art von Kommunikationsdaten ist damit nicht gegeben.

So ist der Stand der Technik beim Versand von E-Mails in hohem Maße unsicher. E-Mail-Adressen können gestohlen, fingiert und/oder getarnt werden, sodass der Empfänger oft nicht sagen kann, wer der wirkliche Absender ist. Über das bevorzugte Computerprogrammprodukt sind versendete Nachrichten, wie z. B. E-Mails, immer eindeutig dem Absender zu zuordnen. Die ausgetauschten Zertifikate so wie die eindeutige Registrierung verhindern vorteilhaft, dass Dritte unberechtigt Nachrichten an einen Empfänger senden können.

Beim aktuellen Stand der E-Mail-Technik ist es möglich, z. B. jede Person mit einem E-Mail-Konto anzuschreiben. Durch das bevorzugte computerimplementierte Verfahren unter Einsatz des bevorzugten Computerprogrammproduktes können nur Personen einer anderen Person beispielsweise eine Nachricht senden, wenn diese zuvor als Absender durch eine angenommene Einladung zugelassen wurde.

Weiterhin können im aktuellen Stand der Technik Anhänge, wie z. B. Dokumente, insbesondere bei E-Mails und/oder auf anderen Übertragungswegen, beifügt werden. Diese werden jedoch ohne zusätzlich vorgenommene Sicherheitsmaßnahmen häufig unverschlüsselt übertragen und können so durch Dritte gelesen werden. Vorteilhafterweise ermöglicht das bevorzugte Computerprogrammprodukt, Anhänge (wie z. B. Dokumente) an Nachrichten beizufügen. Vorteilhafterweise werden diese dann genauso verschlüsselt übertragen wie der Rest der Nachricht. Zusätzlich kann der Nutzer Dokumente mit Rechten versehen, sodass er festlegen kann, was der Empfänger mit den erhaltenen Dokumenten machen kann.

In einem weiteren Aspekt betrifft die Erfindung ein Kommunikationsgerätenetzwerk zur informationssicheren Kommunikation umfassend mindestens ein erstes Kommunikationsgerät und ein zweites Kommunikationsgerät, wobei das erste Kommunikationsgerät und das zweite Kommunikationsgerät jeweils eine Recheneinheit umfassen und nach einer Installation eines Computerprogrammproduktes dazu konfiguriert sind, folgende Schritte auszuführen:
a) Übermittlung einer Einladung ausgehend von dem ersten Kommunikationsgerät an das zweite Kommunikationsgerät, wobei bei der Übermittlung der Einladung ein Sicherheitszertifikat an das zweite Kommunikationsgerät übermittelt wird,
b) Annahme der Einladung ausgehend von dem zweiten Kommunikationspartner sowie Überprüfung des Sicherheitszertifikates,
c) Rückmeldung an einen Vermittlungsserver bei bestandener Prüfung des Sicherheitszertifikates,
d) direkte Übermittlung von Kommunikationsdaten zwischen dem ersten Kommunikationsgerät und dem zweiten Kommunikationsgerät.

Das bevorzugte Computernetzwerk führt vorteilhaft zu einer sicheren, insbesondere abhörsicheren Kommunikation zwischen Kommunikationspartnern. Hierbei können vorteilhaft Kommunikationsdaten direkt untereinander zwischen den Kommunikationsgeräten der Kommunikationspartner übermittelt werden. Vorteilhaft erfolgt die Verbindung der einzelnen Kommunikationsgeräte nicht über einen Server, sondern wird direkt untereinander aufgebaut. Insbesondere ist vorteilhaft die Verbindung zwischen den Kommunikationsgeräten verschlüsselt.

Ein Kommunikationsgerätnetzwerk bezeichnet bevorzugt einen Verbund umfassend mehrere Kommunikationsgeräte zum Zweck des Austauschs von Daten. Mithin wird durch das Kommunikationsgerätenetzwerk die Möglichkeit geschaffen, Datenaustausch zwischen den Kommunikationsgeräten auszuüben.

Das Kommunikationsgerätenetzwerk kann bevorzugt für eine private Nutzung angewendet werden, insbesondere durch das Computerprogrammprodukt.

Daher ist in einer weiteren bevorzugten Ausführungsform das Kommunikationsgerätenetzwerk dadurch gekennzeichnet, dass die Kommunikation zwischen Kommunikationspartnern erfolgt, wobei die Recheneinheit des ersten Kommunikationsgerätes und/oder das auf der Recheneinheit des ersten Kommunikationsgerätes installierte Computerprogrammprodukt dazu konfiguriert ist, den Vermittlungsserver bereitzustellen.

Da, im Gegensatz zur Ausführungsform eines Kommunikationsverbundes, keine Vermittlungsstelle vorhanden ist, ist es bevorzugt, dass das erste Kommunikationsgerät, welches als Einlader fungiert, über eine feste IP-Adresse verfügt. Folglich kann sich das zweite Kommunikationsgerät (Eingeladener) für die Kommunikation einloggen, sodass eine direkte Übermittlung von Kommunikationsdaten zwischen den Kommunikationsgeräten ermöglicht wird. Es ist bevorzugt, dass wenn sobald ein Nutzer mit seinem Kommunikationsgerät online geht, Kontaktinformationen zwischen dem ersten Kommunikationsgerät und dem zweiten Kommunikationsgerät ausgetauscht werden.

Ebenfalls ist es bevorzugt, dass das Kommunikationsgerätenetzwerk im Kontext eines Kommunikationsverbundes vorliegt. Demzufolge ist in einer weiteren bevorzugten Ausführungsform das Kommunikationsgerätenetzwerk dadurch gekennzeichnet, dass die Kommunikation zwischen Kommunikationspartnern innerhalb eines Kommunikationsverbundes erfolgt, wobei bevorzugt der Vermittlungsserver auf einem Webserver installiert ist und als Vermittlungsstelle fungiert.

Vorzugsweise werden nach der Installation des Vermittlungsservers auf einem Webserver des Kommunikationsverbundes alle Kommunikationspartner, die das Computerprogrammprodukt nutzen, als Nutzer in der Vermittlungsstelle angelegt. Bevorzugt werden Berechtigungen für künftige Kommunikationen über die Vermittlungsstelle gespeichert. Weiterhin ist es bevorzugt, dass die Vermittlungsstelle Kontaktinformationen, wie z. B. die E-Mail-Adresse der zugelassenen und der gesperrten Kommunikationspartner speichert. Besonders bevorzugt ist die E-Mail-Adresse die relevante Information über die Kommunikationspartner im Kontext eines Kommun ikationsverbundes.

Durch die bevorzugte Einladung wird die Kommunikation mit der Vermittlungsstelle aufgebaut und die für den Verbindungsaufbau benötigten Informationen an das jeweilige Computerprogrammprodukt weitergegeben. Somit wird künftig die Vermittlungsstelle bevorzugt auf Anfrage des Computerprogrammproduktes die benötigten Informationen an das jeweilige Computerprogrammprodukt weitergeben. Hierdurch können sich vorteilhaft die Kommunikationsgeräte direkt untereinander verbinden.

Wird in bevorzugten Ausführungsformen die Einladung auf der Vermittlungsstelle gelöscht, werden künftig keine Daten mit dem geblockten bzw. gesperrten Nutzer ausgetauscht.

Bevorzugt werden zum erstmaligen Aufbau zur Vermittlungsstelle der Benutzer (z. B. eines Angestellten des Kommunikationsverbundes) und ein Einmalpasswort ausgetauscht. Die Übermittlung der Kommunikationsdaten erfolgt bevorzugt verschlüsselt. Dementsprechend ist es bevorzugt, dass alle für den Verbindungsaufbau benötigten Informationen innerhalb des Computerprogrammproduktes gespeichert werden.

In einem weiteren Aspekt betrifft die Erfindung ein Computerprogrammprodukt zur informationssicheren Kommunikation zwischen einem ersten Kommunikationsgerät und einem zweiten Kommunikationsgerät, wobei beim Ausführen des Computerprogrammproduktes folgende Schritte ausgeführt werden:
a) Übermittlung einer Einladung ausgehend von dem ersten Kommunikationsgerät an das zweite Kommunikationsgerät, wobei bei der Übermittlung der Einladung ein Sicherheitszertifikat an das zweite Kommunikationsgerät übermittelt wird,
b) Annahme der Einladung ausgehend von dem zweiten Kommunikationspartner sowie Überprüfung des Sicherheitszertifikates,
c) Rückmeldung an einen Vermittlungsserver bei bestandener Prüfung des Sicherheitszertifikates,
d) direkte Übermittlung von Kommunikationsdaten zwischen dem ersten Kommunikationsgerät und dem zweiten Kommunikationsgerät.

Vorteilhafterweise führt der Einsatz des bevorzugten Computerprogrammproduktes zu einer abhörsicheren Kommunikation der Kommunikationsdaten. Insbesondere werden vorteilhafterweise die Kommunikationsdaten nicht auf den Server des Herstellers des Computerprogrammproduktes geleitet. Stattdessen findet vorteilhafterweise ein direkter, entsprechend serverloser Austausch von Kommunikationsdaten statt.

Das bevorzugte Computerprogramm liegt vorzugsweise in zwei bevorzugten Ausführungsformen vor. In einer bevorzugten Ausführungsform ist das Computerprogrammprodukt derart konfiguriert, dass Einladungen versendet und empfangen werden können. In einer weiteren bevorzugten Ausführungsform ist das Computerprogrammprodukt derart konfiguriert, dass Einladungen angenommen, jedoch nicht versendet werden können.

In einem weiteren bevorzugten Ausführungsform ist das Computerprogrammprodukt dadurch gekennzeichnet, dass das Computerprogrammprodukt eine Benutzeroberfläche bereitstellt, sodass die Einladung durch eine Bedienung der Benutzeroberfläche aussendbar und/oder annehmbar ist.

So umfasst das Computerprogrammprodukt eine Vermittlungsschicht, eine Funktionsschicht sowie eine Datenbank. Die Vermittlungsschicht umfasst insbesondere die Funktion, Einladungen auszusenden. Durch die Funktionsschicht können Kommunikationsdaten übermittelt und optimiert (Relaisschicht) werden, sodass hierdurch eine Chat- Video-, Ton- und/oder ein allgemeiner Datenaustausch ermöglicht wird. Die Datenbank enthält bevorzugt Informationen hinsichtlich übermittelter Kommunikationsdaten, z. B. Chats sowie Informationen über Kommunikationsteilnehmer und Informationen über gelöschte Kommunikationsteilnehmer. Insbesondere ist es durch eine Bedienung der bereitstellbaren Benutzeroberfläche möglich, Einladungen zu versenden, um eine Kommunikation durchführen zu können. Ebenfalls ist es möglich, Einladungen anzunehmen.

Das bevorzugte Computerprogrammprodukt verfügt bevorzugt über eine Benutzeroberfläche (GUI, englisch Graphical User Interface), mit der sich die einzelnen Funktionen steuern lassen. Es ist vorteilhafterweise nicht möglich, das Computerprogrammprodukt von außen zu steuern. Die einzelnen Funktionen sind so optimiert, dass sie Ihrem Nutzer ein Höchstmaß an Sicherheit gewährleisten. Vorteilhafterweise gib es keine Automatismen, mit denen sich Abläufe wie die Versendung von Nachrichten oder Chats automatisieren lassen.

Massenversendungen von Nachrichten sind ebenso nicht möglich. Das Computerprogrammprodukt ist nicht dazu gedacht, Massen von Teilnehmern auf einmal zu erreichen. Vielmehr ist alles vorteilhafterweise dem Aspekt der Sicherheit und einer koordinierten und strukturierten Kommunikation untergeordnet.

In einer weiteren bevorzugten Ausführungsform ist das Computerprogrammprodukt dadurch gekennzeichnet, dass das Computerprogrammprodukt eine Benutzeroberfläche bereitstellt, sodass die Einladung durch eine Bedienung der Benutzeroberfläche annehmbar ist.

Somit liegt auch eine Ausführungsform vor, die lediglich über eine Funktionsschicht sowie eine Datenbank umfasst. Damit können Einladungen angenommen werden, jedoch nicht versendet werden.

Der durchschnittliche Fachmann erkennt, dass technische Merkmale, Definitionen und Vorteile bevorzugter Ausführungsformen, welche für das erfindungsgemäße computerimplementierte Verfahren gelten, gleichermaßen für das erfindungsgemäße Kommunikationsgerätenetzwerk sowie auch für das erfindungsgemäße Computerprogrammprodukt gelten, und umgekehrt.

Weiterhin erkennt bevorzugt der durchschnittliche Fachmann, dass Schritte, wie z. B. Verfahrensschritte, und/oder Fähigkeiten der erfindungsgemäßen Aspekte bevorzugt auch darauf gerichtet sein können, dass das bevorzugte Computerprogrammprodukt Befehle umfasst, die entsprechende Schritte, wie z. B. entsprechende Verfahrensschritte, und/oder entsprechende Fähigkeiten bewirken können.

Die erfindungsgemäßen Konzepte sollen im Folgenden anhand von Beispielen näher erläutert werden, ohne auf diese Beispiele beschränkt zu sein.

### FIGUREN

### Kurzbeschreibunq der Figuren

- **Fig. 1**: Schematische Darstellung eines Verfahrens zur Kommunikation aus dem Stand der Technik
- **Fig. 2**: Schematische Darstellung eines bevorzugten Verfahrens einer verschlüsselten Kommunikation
- **Fig. 3**: Schematische Darstellung eines Datenaustauschs zwischen einem Vermittlungsserver und einem Kommunikationsgerät
- **Fig. 4**: Schematische Veranschaulichung einer zertifikatsgestützten Kommunikation
- **Fig. 5**: Schematische Darstellung einer zertifikatsgestützten Verbindungssteuerung
- **Fig. 6**: Schematische Darstellung eines nicht-vorhandenen Vermittlungsservers
- **Fig. 7**: Illustrierung eines Clientverhaltens, wenn der Vermittlungsserver nicht mehr erreichbar ist
- **Fig. 8**: Verfahren für den Vermittlungsserver bzw. eine Anwendung zur Registrierung und zertifikatsgestützter Einladung weiterer anonymer Nutzer
- **Fig. 9**: Schematische Darstellung eines Verfahrens zur Lastverteilung
- **Fig. 10**: Darstellung einer Lastverteilung durch ein einladendes Kommunikationsgerät
- **Fig. 11**: Darstellung einer Lastverteilung durch ein einladendes Kommunikationsgerät und einer Vermittlungsstelle
- **Fig. 12**: Illustration einer serverlosen Kommunikation zwischen Clients
- **Fig. 13**: Darstellung eines Vermittlungsservers
- **Fig. 14**: Verbildlichung einer Vermittlungsstelle

### Detaillierte Beschreibung der Figuren

**Fig. 1** stellt ein Verfahren zur Kommunikation dar, welches im Stand der Technik eingesetzt wird.

Hierbei sendet PC1 eine Nachricht an PC2, diese wird zum Softwareprovider geleitet und von da aus zum PC2. Der Server des Softwareproviders empfängt somit alle Nachrichten und kann diese lesen oder verarbeiten.

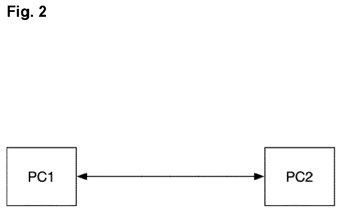

**Fig. 2** stellt ein bevorzugtes Verfahren zur Kommunikation dar.

Die Kommunikation zwischen den beiden PC's wird direkt und verschlüsselt aufgebaut, die Daten werden von keinem Server zwischengespeichert. Die Kommunikation wird direkt zwischen den beiden PC's verschlüsselt und übertragen über das erfindungsgemäße Computerprogrammprodukt (Point One App).

**Fig. 3** stellt einen Datenaustausch zwischen einem Vermittlungsserver und einem Kommunikationsgerät dar.

Der Nutzer beginnt mit der Installation des Computerprogrammproduktes, nach Eingabe des Registrierungsschlüssels wird die Kommunikation zum Registrierungsserver aufgenommen. Nach dem der Server den Registrierungsschlüssel anerkannt hat, wird auf PC 1 ein Sicherheitszertifikat erstellt.

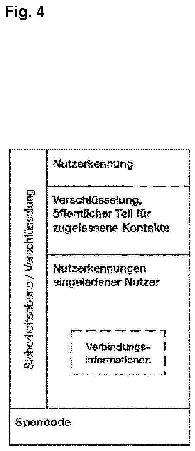

**Fig. 4** stellt den Aufbau des Sicherheitszertifikates dar.

Nach der erfolgreichen Registrierung erstellt das Computerprogramm ein Sicherheitszertifikat. Der öffentliche Teil des Zertifikates enthält die Daten für den Kommunikationsaufbau. Zu den Kommunikationsinformationen gehört eine eindeutige Nutzerkennung.

Die Nutzerkennung ist dem Computerprogrammprodukt und nicht der Person zugeordnet. Es lässt sich also nicht feststellen, welcher Nutzer zu welcher Kennung gehört. Dieses Sicherheitszertifikat wird in regelmäßigen Abständen erneuert und enthält die aktuellen Informationen, über die das Kommunikationsgerät angesprochen werden kann.

Zu den Kommunikationsinformationen gehören die Nutzerkennungen, welche vom Nutzer des Kommunikationsgerätes eingeladen wurden. Wird ein Kontakt hinzugefügt, so wird das Sicherheitszertifikat auf dem Vermittlungsserver sofort um die zusätzlichen neuen Kontaktinformationen ergänzt. Auch diese Daten können keiner Person zugeordnet werden. Das Gleiche passiert, wenn sich der Standort oder die IP des Nutzers ändert. Alle diese Informationen sind verschlüsselt und lassen keinen Rückschluss auf den Nutzer oder dessen Standort zu.

Es wird nur ermittelt, welche Nutzerkennungen jeweils übereinstimmen, damit diese die jeweiligen Informationen austauschen und somit miteinander kommunizieren können.

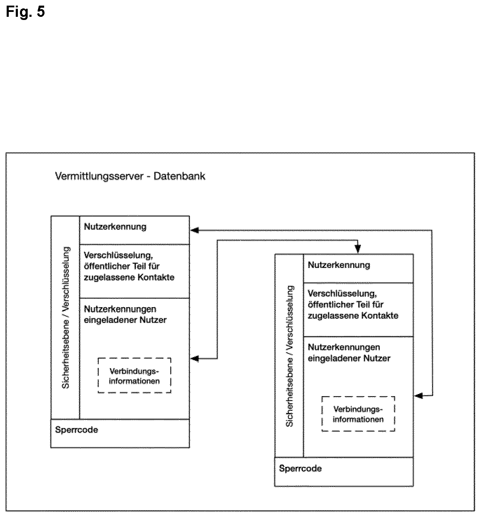

**Fig. 5** stellt eine zertifikatsgestützte Verbindungssteuerung dar.

Hierbei werden die Nutzerkennung des Einladers und die Nutzerkennung der eingeladenen Kommunikationspartner abgeglichen, um zugelassene Verbindungen zwischen einzelnen Nutzern zu verifizieren. Nur wenn das auf dem Vermittlungsserver abgelegte Zertifikat die Nutzerkennung eines zugelassenen Nutzers enthält, werden die beiden Zertifikate miteinander verbunden. Immer wenn eine Einladung angenommen wurde, werden die Zertifikate aktualisiert. Das gilt auch, wenn ein Nutzer aus den Kontakten entfernt wird. Das bedeutet, dass wenn die Nutzerkennung des entfernten Kontaktes aus dem Sicherheitszertifikat gelöscht wird, die lokale Änderung des Zertifikates einen Aktualisierungsprozess startet, der das geänderte Zertifikat an den Vermittlungsserver übermittelt und somit der künftige Austausch von Verbindungsdaten mit dem ehemaligen Kontakt unterbunden wird.

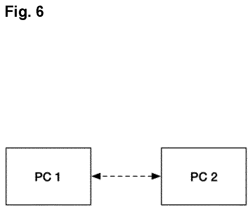

**Fig. 6** soll abbilden, wie der Datenaustausch ohne einen Vermittlungsserver erfolgt.

Ist der Vermittlungsserver (einer von mehreren) nicht erreichbar, nehmen die Computerprogrammprodukte eigenständig Kontakt zu anderen Computerprogrammprodukten auf, mit denen bereits Kontaktinformationen ausgetauscht wurden und tauschen so direkt die aktuellsten Verbindungsinformationen aus. Bevor der Austausch stattfindet, wird überprüft, ob die Nutzerkennung bereits auf beiden Seiten angenommen wurde. Nur wenn die Nutzerkennungen innerhalb der Sicherheitszertifikate vorhanden sind, werden die Verbindung aufgebaut und die Informationen ausgetauscht.

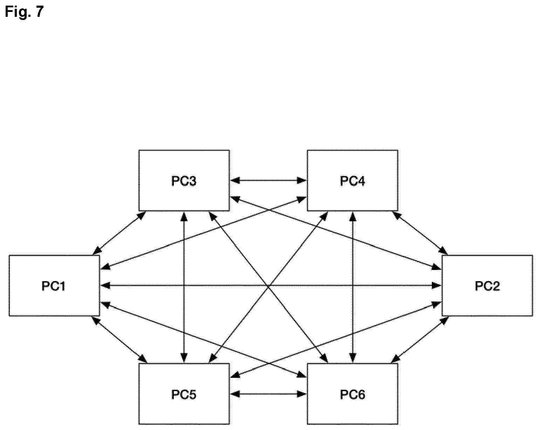

**Fig. 7** beschreibt das Verhalten von Clients, sobald der Vermittlungsserver nicht mehr erreichbar ist.

Nach dem heutigen Stand der Technik ist es nicht mehr möglich, über die üblichen Wege im Internet zu kommunizieren, sobald der Kommunikationsserver (z. B. Office 365, Teams, Zoom, Skype, etc.) ausfällt. Erfindungsgemäß wird die Kommunikationsmöglichkeit trotz Ausfall des Servers aufrechterhalten, da die Clients den direkten Austausch der Verbindungsinformationen initiieren.

Selbst wenn einzelne PC's zum Zeitpunkt des Ausfalls der Vermittlungsserver offline waren, werden diese nach und nach wieder in das Netz eingebunden, sobald diese wieder online gehen. Da die PC's mit jedem bestätigten Kontakt wieder den Kontakt aufnehmen, wird das Netz wieder aufgebaut.

Damit reicht es, wenn ein Nutzer eines Kontaktverbundes zum Ausfallzeitpunkt erreichbar ist. Über diesen einen Nutzer ist es möglich, dass sich andere Nutzer nach und nach wieder im Netz einbinden. Mit jedem zusätzlich eingebundenen Nutzer nimmt die Geschwindigkeit, mit der das Netz wieder aufgebaut wird, exponentiell zu.

Der Unterschied zwischen der Vermittlungsstelle und dem Vermittlungsserver liegt bevorzugt in folgenden Punkten:
Über den Vermittlungsserver kann man sich bevorzugt als neuer Nutzer registrieren, auch die Vermittlungsstelle muss sich zur Installation am Vermittlungsserver registrieren. Der Vermittlungsserver speichert jedoch bevorzugt keine Kommunikationsdaten, er kann nicht als Relais genutzt werden. Der Vermittlungsserver verwaltet bevorzugt lediglich die Registrierungs- und Zertifikatsdaten und stellt vorzugsweise die Verbindungsdaten zur Verfügung.

Je mehr Kontakte ein einzelner Nutzer zugelassen hat, desto schneller kann dieser wieder in den Verbund integriert werden. Neue Kontakte oder neue Installationen von Computerprogrammprodukten sind während eines Ausfalls des Kommunikationsservers nicht möglich.

Für Unternehmen, die die Vermittlungsstelle nutzen, gelten die gleichen Voraussetzungen. Auch diese Clients können weiterhin miteinander kommunizieren. Die Unterschiede liegen in den erweiterten Funktionen der Vermittlungsstelle. Solange diese offline ist, kann sie keine Daten speichern und eine geführte Kommunikation kann lediglich über das Computerprogramm auf einem Rechner nachverfolgt werden.

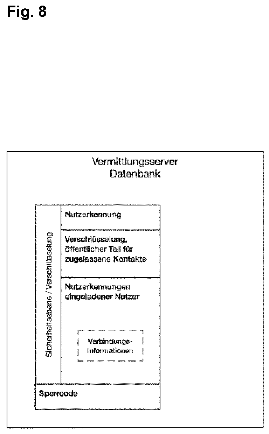

**Fig. 8** stellt ein Verfahren für den Vermittlungsserver bzw. eine Anwendung zur Registrierung und einer zertifikatsgestützten Einladung weiterer anonymer Nutzer dar.

Jedes Sicherheitszertifikat ist verschlüsselt und besitzt eine Sicherheitsebene, die bei der Erstellung des Zertifikates generiert wird. Der Vermittlungsserver überprüft die Zertifikate auf Richtigkeit und auf Manipulationen. Ergibt diese Prüfung einen unberechtigten Zugriff bzw. zeigt das Zertifikat einen Fehler an, wird es abgelehnt und der Sender des Sicherheitszertifikates wird geblockt.

Da die Nutzerkennung keinen Rückschluss auf die Person gibt, der diese Kennung zugeordnet ist, muss der betroffene Nutzer erst nachweisen, dass kein Missbrauch, sondern ein technisches Problem für die Zertifikatsablehnung vorlag.

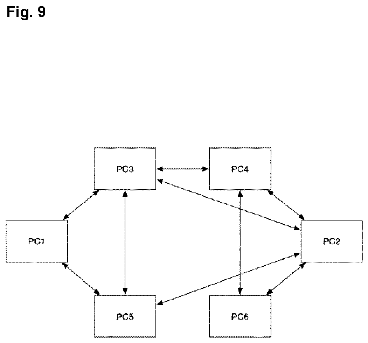

**Fig. 9** stellt eine Lastverteilung hinsichtlich des Datenaustausches dar.

Während des Kommunikationsaufbaus ermittelt das Computerprogrammprodukt die zur Verfügung stehende Internetbandbreite sowie die vorhandenen Rechnerkapazitäten. Die an der Kommunikation teilnehmenden Rechner handeln anschließend aus, wie die Lasten des Datenaustausches verteilt werden.

Neben der Reduzierung der Lasten bei schwächeren Geräten bzw. bei Geräten mit schwächerer Internetanbindung wird so auch die gesamte zu übertragende Datenmenge reduziert. Bei Unternehmen, die eine Vermittlungsstelle einsetzen, kann die Kommunikation auch komplett über diese verteilt und gesteuert werden.

Die Aushandlung der Ressourcenverteilung erfolgt über den einladenden Rechner. Da sich alle eingeladenen Benutzer bei diesem Rechner in die Kommunikation einwählen, ist dieser auch für die Verteilung der Datenströme zuständig.

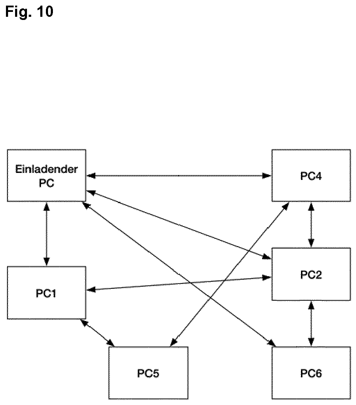

**Fig. 10** stellt eine Lastverteilung dar.

Der einladende Rechner erhält die Informationen zu vorhandenen Ressourcen. Zugleich teilt er den eingebundenen Rechnern mit, welche Rechner noch an der Kommunikation beteiligt sind und leitet die Verbindungsinformationen an alle Teilnehmer des Meetings. Diese Daten werden nur temporär gespeichert und dienen dazu, die Verbindungsgeschwindigkeit und Erreichbarkeit der einzelnen an der Kommunikation beteiligten Rechner zu ermitteln. So werden die effizientesten Verbindungswege zwischen den Teilnehmern ermittelt und etabliert.

Die Verbindungswege und die Lastverteilung werden anhand der folgenden Regeln bzw. dem folgenden Vorgehen unter den Rechnern ausgehandelt:
1. Das Kommunikationsprofil wird automatisch an jeden Teilnehmer gesendet Das Profil übermittelt die zuvor ermittelten Daten bezüglich der Rechnerperformance sowie einen Zeitstempel zur Ermittlung der Übertragungsqualität, die gewünschte Kommunikationsart sowie den erwarteten Ressourcenbedarf. Das Kommunikationsprofil bezeichnet bevorzugt eine Zusammenfassung der Informationen über die Verarbeitungsgeschwindigkeit, z. B. von Videodaten, der ermittelten Internetgeschwindigkeit in Down- und Upstream und/oder dem Zeitstempel mit dem Beginn der Datenübertragung, insbesondere von Kommunikationsdaten.
2. Ermittlung der aktuellen Ressourcen
   Die Rechner ermitteln die eigenen zur Verfügung stehenden Ressourcen und senden das Ergebnis an den Einladenden sowie an alle Teilnehmer.
3. Ermittlung der Kommunikationswege
   Parallel ermitteln die Rechner die Verbindungsgeschwindigkeit zu jedem Teilnehmer und zum Einladenden.
4. Erstellung der Konfigurationsdatei
   Auf Basis der eingehenden Informationen legt der einladende Rechner fest, welches Qualitätslevel bei dem Rechner mit den geringsten Ressourcen möglich ist, erstellt die Einstellungsdatei und sendet diese an alle Teilnehmer. In dieser Einstellungsdatei wird auch festgelegt, wie die Rechner miteinander verbunden werden. So ist es auch möglich, Datenpakete aufzuteilen und so Lastspitzen zu vermeiden. Die einzelnen Rechner melden ständig die Verbindungsqualität an den einladenden PC. Dadurch wird dieser Prozess der Verbindungsoptimierung zu einem dynamischen Prozess, der stetig im Hintergrund abläuft.

**Fig. 11** zeigt eine Lastverteilung mit einer Vermittlungsstelle.

Bei Unternehmen, die eine Vermittlungsstelle nutzen, kann die Vermittlungsstelle als Zentrale für die Koordination und den laufenden Optimierungsprozesse genutzt werden. Der einladende PC kann, wenn sein Computerprogrammprodukt an eine Vermittlungsstelle gekoppelt ist, festlegen, dass die Vermittlungsstelle die Einstellungsdatei mit den Teilnehmern aushandelt und den laufenden Optimierungsprozess für das Meeting steuern.

Die Kommunikation selbst läuft weiter direkt zwischen den einzelnen Computern ab.

**Fig. 12** stellt eine bevorzugte Verschlüsselung dar.

Das Computerprogrammprodukt beinhaltet alle Elemente, um eigenständig eine verschlüsselte Kommunikation aufzubauen. Der Nutzer, der einen anderen Nutzer einladen möchte, sendet eine Zertifikat mit der E-Mail-Adresse eines Nutzers, den er einladen möchte, an den Vermittlungsserver.

Der Vermittlungsserver überprüft anhand der E-Mail-Adresse, ob dieser Nutzer bereits registriert ist. Auch die E-Mail-Adresse liegt in verschlüsselter Form innerhalb des Zertifikates vor und kann nicht in Klarschrift gelesen werden.

Ist die E-Mail-Adresse bereits angemeldet, leitet der Vermittlungsserver diese Einladung in Form eines Einladungszertifikates an den entsprechenden Nutzer. Nimmt dieser Nutzer die Einladung an, wird ein entsprechendes Zertifikat an den Vermittlungsserver gesendet und beide User über ihre Benutzerzertifikate miteinander vernetzt. Anschließend wird der Einladende über den Vermittlungsserver darüber informiert, dass die Einladung angenommen wurde.

Wird die Einladung abgelehnt, wird der Einladende auch darüber informiert, dass die Einladung abgelehnt wurde. Bei der Ablehnung kommt es jedoch nicht zu einer Verknüpfung der Zertifikate.

Ist die E-Mail-Adresse noch nicht zertifiziert, wird der Einladende darüber informiert, dass der Eingeladene das Computerprogrammprodukt noch nicht nutzt.

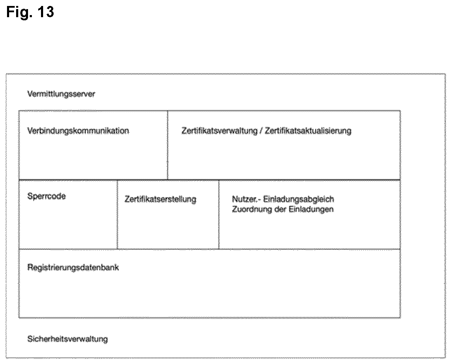

**Fig. 13** zeigt schematisch das Funktionsprinzip des Vermittlungsservers.

Der Vermittlungsserver dient der Registration der neuen Nutzer und dem Abgleich von Nutzereinladungen. Zum Schutz gegen Missbrauch muss jeder Nutzer sich eindeutig ausweisen, um sich registrieren zu können. Die Registration für das Computerprogrammprodukt ist der einzige Punkt, an dem der Nutzer eindeutig identifiziert werden kann.

Der Registrierungsschlüssel, der zur Installation benötigt wird, wird während der Registration erzeugt. Zugleich wird innerhalb des Registrierungsschlüssels eine Sequenz erstellt, die genutzt werden kann, um den Jeweiligen zu sperren. Diese Codesequenz wird nach der Anmeldung auf dem Vermittlungsserver ein Teil des Sicherheitszertifikates. Da das Sicherheitszertifikat verschlüsselt ist, kann die für die Sperrung einzelner Nutzer benötigte Sequenz und der vorliegende Sperrcode nicht direkt dem Nutzer zugeordnet werden.

Der Vermittlungsserver umfasst bevorzugt mehrere Ebenen bzw. Schichten:
1. Sicherheitsverwaltung
   Der Vermittlungsserver akzeptiert zur Kommunikation lediglich Registrierungsanträge (Registrierungszertifikate), Nutzerzertifikate oder Einladungsanträge (Einladungszertifikate). Jedes Zertifikat wird vor der Verarbeitung auf Echtheit und Richtigkeit hin überprüft. Kann die Prüfung nicht erfolgreich abgeschlossen werden, wird die Annahme/Verarbeitung verweigert.
2. Registrierungsdatenbank
   Erst wenn die Sicherheitsverwaltung das eingehende Zertifikat freigegeben hat, kann es durch die Registrierungsdatenbank verarbeitet werden. Wird die Verarbeitung mit einem negativen Ergebnis beendet, wird ein Sperrcode erstellt, der die abschließende Installation/Inbetriebnahme verhindert. Wird jedoch ein positives Ergebnis bei der Registrierung erstellt, wird ein Sicherheitszertifikat erstellt, mit dem der Nutzer auf dem Server registriert wird. Anschließend wird das Nutzerzertifikat an den Antragsteller gesendet und das Computerprogrammprodukt (Point One App) kann genutzt werden.
3. Sperrcode
   Der Sperrcode wird immer erstellt. Bei einer positiv verlaufenden Registrierung wird dieser in der Datenbank abgelegt und bleibt dort gespeichert. Im Falle des Missbrauches kann so gezielt ein User gesperrt werden, ohne dass man wissen muss, welches Sicherheitszertifikat dem User zugeordnet wurde. Das erlaubt es Nutzer zu sperren, auch wenn die Sicherheitszertifikate nicht den Nutzern zugeordnet werden können.
   Es handelt sich hier um eine passive Sperrung. Das bedeutet, dass der Nutzer nicht vom Account ausgeschlossen wird, vielmehr wird nur der Sperrcode in der Sicherheitsverwaltung aktiviert und dadurch jegliche weitere Kommunikation mit dem Vermittlungsserver unterbunden. Zeitgleich erfolgt über die Rückmeldung des nicht zugelassenen Zertifikates die Sperrung des Computerprogrammproduktes auf allen Geräten des Nutzers. Dadurch stellt das Kommunikationsgerät auch die Kommunikation mit allen zugelassenen eingeladenen Nutzern oder allen angenommenen Einladungen anderer Nutzer ein.
4. Zertifikatserstellung
   Das Nutzerzertifikat wird bei der Registrierung erstellt und ermöglicht die endgültige Einrichtung des Computerprogrammproduktes. Dieses Zertifikat wird bei der Einrichtung des Computerprogrammproduktes genutzt und um Sicherheitsmerkmale des Rechners und eine erweiterte Verschlüsselung erweitert. Die Übermittlung des eigentlichen Sicherheitszertifikates erfolgt nach der Fertigstellung der Installation auf dem PC an die übermittelte Serveradresse und den nun integrierten Registrierungsdaten.
5. Nutzer.- und Einladungsabgleich
   Hat sich ein Nutzer erfolgreich registriert, wird seine E-Mail-Adresse auf der Nutzerdatenbank hinterlegt. Lädt nun ein Nutzer einen anderen Nutzer ein, so wird der eingeladene Nutzer über den Registrierungsserver darüber informiert. Diese Information wird über das Registrierungszertifikat an den Nutzer übermittelt. Nimmt dieser die Einladung an, wird das Sicherheitszertifikat in dem Computerprogrammprodukt um diese Information erweitert und danach auf dem Registrierungsserver aktualisiert.
6. Zertifikatsverwaltung
   Der Einladungsabgleich schafft nun die Verbindung der Zertifikate der jeweiligen Nutzer. Dazu wird der Teil des Zertifikates, der die eingeladenen Nutzer verwaltet, genutzt und in der Zertifikatsverwaltungen wird das Zertifikat des Einladenden mit einem Zusatz versehen, dass die Annahme der Einladung bestätigt. Direkt im Anschluss wird dieses Zertifikat an den Einladenden übermittelt. Wenn dieser nun dies auf seinem Rechner bestätigt, wird das Zertifikat innerhalb des Computerprogrammproduktes um die Informationen des Eingeladenen erweitert. Ab diesem Zeitpunkt können der Einladende und der Eingeladene über das Computerprogrammprodukt miteinander kommunizieren.
7. Verbindungskommunikation
   Hier veröffentlichen die angebundenen Computerprogrammprodukte (Point One Apps) über ihr Sicherheitszertifikat ihre Kommunikationsdaten. Computerprogrammprodukte, die über die passenden Kennungen verfügen, können die entsprechenden Zertifikate abrufen, um mit anderen Nutzern zu kommunizieren. Ist der Vermittlungsserver nicht erreichbar, beginnen die einzelnen Computerprogrammprodukte diese Daten über ihre bereits eingebundenen Kontakte abzugleichen.

Fig. 14 dient zur Verbildlichung der Vermittlungsstelle.

Die Vermittlungsstelle für einen Kommunikationsverbund, insbesondere für Unternehmen, ersetzt den Vermittlungsserver und übernimmt dessen Aufgaben. Die Vermittlungsstelle besitzt einen erweiterten Funktionsumfang zur Speicherung von Kommunikationsdaten und Funktionen, die diese Speicherung entsprechend der Vorgaben des Datenschutzes (DSGVO) sicherstellen.

Die Vermittlungsstelle selbst wird bevorzugt über die unternehmenseigene Domain registriert. Auch bei der Registrierung der Vermittlungsstelle wird ein Sperrcode erstellt, so dass auch dieser gesperrt werden kann. Wird die Vermittlungsstelle gesperrt, werden gleichzeitig auch alle bei ihr registrierten Computerprogrammprodukte gesperrt. Da Computerprogrammprodukte nur beim Vermittlungsserver oder bei der Vermittlungsstelle (für Unternehmen) registriert werden können, ist nach der Sperrung der Vermittlungsstelle eine weitere Nutzung des Computerprogrammproduktes grundsätzlich nicht mehr möglich. Da es nicht möglich ist, mehr als eine Installation auf einem Rechner zu registrieren, kann ein Unternehmensrechner, der mit einem gesperrten Unternehmensaccount verbunden ist, nicht weiter mit dem Computerprogrammprodukt genutzt werden. Wird dies trotzdem erforderlich, muss zuvor die Unternehmensregistrierung (des gesperrten Accounts) beim Vermittlungsserver gelöscht werden. Wird ein Rechner verkauft, muss dessen Registrierung auf der Vermittlungsstelle entfernt werden, damit auf diesem wieder ein entsprechendes Computerprogrammprodukt installiert werden kann.

Im Gegensatz zur privaten Nutzung ist auf der Vermittlungsstelle in Klarschrift zu sehen, welches Unternehmen dem Registrierungszertifikat zugeordnet ist. Da dies der einzige Moment ist, in dem die Vermittlungsstelle mit dem Computerprogrammprodukt-Vermittlungsserver Daten tauscht, ist die Datensicherheit und Datenhoheit auch bei Unternehmen gegeben. Lediglich der für die Sperrung vorgesehene Bereich in der Vermittlungsstelle kann nach der Registrierung noch vom Vermittlungsserver eines Computerprogrammproduktes erreicht werden.

## Patentansprüche

1. Computerimplementiertes Verfahren zur informationssicheren Kommunikation zwischen mindestens einem ersten Kommunikationspartner und einem zweiten Kommunikationspartner, wobei der erste Kommunikationspartner ein erstes Kommunikationsgerät und der zweite Kommunikationspartner ein zweites Kommunikationsgerät besitzt, umfassend folgende Schritte:
a) Installation eines Computerprogrammproduktes auf jeweils einer Recheneinheit des ersten Kommunikationsgerätes und des zweiten Kommunikationsgerätes, wobei das Computerprogrammprodukt,
b) Übermittlung einer Einladung ausgehend vom ersten Kommunikationsgerät an das zweite Kommunikationsgerät, wobei bei der Übermittlung der Einladung ein Sicherheitszertifikat an das zweite Kommunikationsgerät übermittelt wird,
c) Annahme der Einladung ausgehend vom zweiten Kommunikationsgerät sowie Überprüfung des Sicherheitszertifikates,
d) Rückmeldung an einen Vermittlungsserver bei bestandener Prüfung des Sicherheitszertifikates,
e) direkte Übermittlung von Kommunikationsdaten zwischen dem ersten Kommunikationsgerät und dem zweiten Kommunikationsgerät.

2. Computerimplementiertes Verfahren nach dem vorherigen Anspruch
**dadurch gekennzeichnet, dass**
das Sicherheitszertifikat durch die Installation des Computerprogrammproduktes bereitgestellt wird.

3. Computerimplementiertes Verfahren nach einem oder mehreren der vorherigen Ansprüche
**dadurch gekennzeichnet, dass**
die Kommunikationsdaten für die Übermittlung verschlüsselt werden, bevorzugt durch ein asymmetrisches Verschlüsselungsverfahren.

4. Computerimplementiertes Verfahren nach einem oder mehreren der vorherigen Ansprüche
**dadurch gekennzeichnet, dass**
eine Datenübertragungsrate und/oder Datenkapazitäten von Kommunikationsgeräten von Kommunikationspartnern bestimmt werden.

5. Computerimplementiertes Verfahren nach einem oder mehreren der vorherigen Ansprüche
**dadurch gekennzeichnet, dass**
die Kommunikation zwischen mehreren Kommunikationspartnern erfolgt, die jeweils ein Kommunikationsgerät aufweisen und/oder die Kommunikation innerhalb eines Kommunikationsverbundes erfolgt.

6. Computerimplementiertes Verfahren nach einem oder mehreren der vorherigen Ansprüche
**dadurch gekennzeichnet, dass**
die Kommunikation zwischen Kommunikationspartnern erfolgt, wobei das erste Kommunikationsgerät und/oder das auf der Recheneinheit des ersten Kommunikationsgerätes installierte Computerprogrammprodukt den Vermittlungsserver bereitstellt.

7. Computerimplementiertes Verfahren nach einem oder mehreren der vorherigen Ansprüche
**dadurch gekennzeichnet, dass**
die Kommunikation zwischen Kommunikationspartnern innerhalb eines Kommunikationsverbundes erfolgt,
wobei bevorzugt der Vermittlungsserver auf einem Webserver installiert ist und als Vermittlungsstelle fungiert.

8. Computerimplementiertes Verfahren nach einem oder mehreren der vorherigen Ansprüche
**dadurch gekennzeichnet, dass**
die Kommunikationsdaten ausgewählt sind aus einer Gruppe umfassend Textnachrichten, Fotos, Videos, Audionachrichten und/oder Anhänge.

9. Kommunikationsgerätenetzwerk zur informationssicheren Kommunikation umfassend mindestens ein erstes Kommunikationsgerät und ein zweites Kommunikationsgerät, wobei das erste Kommunikationsgerät und das zweite Kommunikationsgerät jeweils eine Recheneinheit umfassen und nach einer Installation eines Computerprogrammproduktes dazu konfiguriert sind, folgende Schritte auszuführen:
a) Übermittlung einer Einladung ausgehend von dem ersten Kommunikationsgerät an das zweite Kommunikationsgerät, wobei bei der Übermittlung der Einladung ein Sicherheitszertifikat an das zweite Kommunikationsgerät übermittelt wird,
b) Annahme der Einladung ausgehend von dem zweiten Kommunikationspartner sowie Überprüfung des Sicherheitszertifikates,
c) Rückmeldung an einen Vermittlungsserver bei bestandener Prüfung des Sicherheitszertifikates,
d) direkte Übermittlung von Kommunikationsdaten zwischen dem ersten Kommunikationsgerät und dem zweiten Kommunikationsgerät.

10. Kommunikationsgerätenetzwerk nach dem vorherigen Anspruch
**dadurch gekennzeichnet, dass**
die Kommunikation zwischen Kommunikationspartnern erfolgt, wobei die Recheneinheit des ersten Kommunikationsgerätes und/oder das auf der Recheneinheit des ersten Kommunikationsgerätes installierte Computerprogrammprodukt dazu konfiguriert ist, den Vermittlungsserver bereitzustellen.

11. Kommunikationsgerätenetzwerk nach Anspruch 9
**dadurch gekennzeichnet, dass**
die Kommunikation zwischen Kommunikationspartnern innerhalb eines Kommunikationsverbundes erfolgt,
wobei bevorzugt der Vermittlungsserver auf einem Webserver installiert ist und als Vermittlungsstelle fungiert.

12. Computerprogrammprodukt zur informationssicheren Kommunikation zwischen einem ersten Kommunikationsgerät und einem zweiten Kommunikationsgerät, wobei beim Ausführen des Computerprogrammproduktes folgende Schritte ausgeführt werden:
a) Übermittlung einer Einladung ausgehend von dem ersten Kommunikationsgerät an das zweite Kommunikationsgerät, wobei bei der Übermittlung der Einladung ein Sicherheitszertifikat an das zweite Kommunikationsgerät übermittelt wird,
b) Annahme der Einladung ausgehend von dem zweiten Kommunikationspartner sowie Überprüfung des Sicherheitszertifikates,
c) Rückmeldung an einen Vermittlungsserver bei bestandener Prüfung des Sicherheitszertifikates,
d) direkte Übermittlung von Kommunikationsdaten zwischen dem ersten Kommunikationsgerät und dem zweiten Kommunikationsgerät.

13. Computerprogrammprodukt nach dem vorherigen Anspruch
**dadurch gekennzeichnet, dass**
das Computerprogrammprodukt eine Benutzeroberfläche bereitstellt, sodass die Einladung durch eine Bedienung der Benutzeroberfläche aussendbar und/oder annehmbar ist.

14. Computerprogrammprodukt nach Anspruch 12
**dadurch gekennzeichnet, dass**
das Computerprogrammprodukt eine Benutzeroberfläche bereitstellt, sodass die Einladung durch eine Bedienung der Benutzeroberfläche annehmbar ist.
